(19) Europäisches Patentamt
European Patent Office
Office européen des brevets

(11) **EP 3 112 877 B1**

(12) **EUROPEAN PATENT SPECIFICATION**

(45) Date of publication and mention
of the grant of the patent:
**18.07.2018 Bulletin 2018/29**

(51) Int Cl.:
$G01P\ 5/00$ (2006.01)   $G01P\ 13/00$ (2006.01)
$B63B\ 39/14$ (2006.01)   $B63B\ 49/00$ (2006.01)

(21) Application number: **15754998.1**

(22) Date of filing: **20.01.2015**

(86) International application number:
**PCT/JP2015/051301**

(87) International publication number:
**WO 2015/129337 (03.09.2015 Gazette 2015/35)**

(54) **SURFACE CURRENT ESTIMATION DEVICE, SURFACE CURRENT ESTIMATION SYSTEM, OCEAN MODEL ESTIMATION DEVICE, AND RISK DETERMINATION DEVICE**

OBERFLÄCHENSTRÖMUNGSSCHÄTZUNGSVORRICHTUNG, OBERFLÄCHENSTRÖMUNGSSCHÄTZUNGSSYSTEM, OZEANMODELLSCHÄTZUNGSVORRICHTUNG UND RISIKOANALYSEVORRICHTUNG

DISPOSITIF D'ESTIMATION DE COURANT DE SURFACE, SYSTÈME D'ESTIMATION DE COURANT DE SURFACE, DISPOSITIF D'ESTIMATION DE MODÈLE OCÉANIQUE ET DISPOSITIF DE DÉTERMINATION DE RISQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2014 JP 2014034478**

(43) Date of publication of application:
**04.01.2017 Bulletin 2017/01**

(73) Proprietor: **Furuno Electric Co., Ltd.
Nishinomiya-City, Hyogo 662-8580 (JP)**

(72) Inventors:
• **IMASAKA, Masashi
Nishinomiya-city
Hyogo 662-8580 (JP)**
• **MAENO, Hitoshi
Nishinomiya-city
Hyogo 662-8580 (JP)**
• **KAWASAKI, Chizu
Nishinomiya-city
Hyogo 662-8580 (JP)**

(74) Representative: **CSY London
10 Fetter Lane
London EC4A 1BR (GB)**

(56) References cited:
**JP-A- H11 237 477      JP-A- S61 159 107
JP-A- 2001 264 437     JP-A- 2003 127 983
JP-A- 2003 344 437     JP-A- 2004 226 374
JP-A- 2004 233 185     JP-A- 2009 248 745
JP-A- 2011 214 471     KR-A- 20080 071 269
US-A1- 2009 326 824**

• **MONTEIRO J R B A ET AL: "Wind Velocity Neural Estimator for Small Autonomous Surface Vehicles", CRITICAL EMBEDDED SYSTEMS (CBSEC), 2012 SECOND BRAZILIAN CONFERENCE ON, IEEE, 20 May 2012 (2012-05-20), pages 6-11, XP032453784, DOI: 10.1109/CBSEC.2012.16 ISBN: 978-1-4673-1912-6**

**Description**

This disclosure relates to a surface current estimating device and a surface current estimating system, which estimate a velocity of a surface current, and to an ocean model estimating apparatus and a dangerousness determining apparatus, which use the device and system, the surface current being a current of sea water in a surface zone of ocean.

Conventionally, as a method of estimating a velocity of a surface current that is a tidal current in a surface zone of ocean, a method disclosed in Patent Document 1 is known, for example. Specifically, in Patent Document 1, a surface current velocity (a velocity of a surface current) is obtained by applying Fourier transform on reception signals obtained by an ocean radar.

Further, as another method of estimating the velocity of the surface current, it is generally known to use instruments, such as an ultrasonic current meter.

Patent Document

Patent Document 1: JP1999-237477A

Meanwhile, with the method disclosed in Patent Document 1, a calculation load for obtaining a spatial distribution of a tidal current is comparatively high and the calculation of the surface current requires comparatively long time.

Whereas, when measuring the surface current with the ultrasonic current meter, a current of a layer below the ultrasonic current meter which is in a state attached to a bottom of a ship is measured. In other words, a current of a shallow layer which causes comparatively large influence on a movement of the ship (a section from a sea surface to the bottom of the ship) cannot be measured.

This disclosure is made in view of the above problems and aims to easily calculate a velocity of a surface current.

KR 2008 0071269 discloses a technique for estimating the direction and speed of a current. The current is estimated based on the difference between the ground speed detected by a DGPS (Differential Global Positioning System), and a velocity detected by a speed log. The speed log is installed on the bottom of a ship to detect water speed as a relative speed of the ship and seawater.

According to one aspect of the present invention there is provided a surface current estimating device as defined in claim 1.

According to another aspect of the present invention there is provided a method of estimating a surface current velocity vector as defined in claim 15.

Preferred features of the invention are recited in the dependent claims.

Here, the ground velocity is a velocity over a ground surface, and the log velocity is a velocity over water (sea).

According to other aspects of the invention there are provided a surface current estimating system as defined in claim 10, an ocean model estimating apparatus as defined in claim 13 and a dangerousness determining apparatus as defined in claim 14.

Generally, in a case of measuring a log velocity of a first ship, for example, an acoustic speed log is used. However in such a case, a large-scale installation work, such as forming a hole in a bottom of the first ship, is required to install the speed log on the first ship.

The device described above is provided for solving the above problems and aims to easily estimate a log velocity vector without requiring the large-scale installation work on the ship.

The log velocity of the ship can be obtained based on the rotational speed of the propeller of the ship and the information of the wind direction and the wind speed which can be obtained comparatively easily. Thus, the log velocity vector can easily be estimated without requiring the large-scale installation work on the ship.

The estimator may be configured using a neural network. Thus, the estimator which outputs the log velocity vector can suitably be configured.

The device described above may further include a propeller speed detector configured to detect the rotational speed of the propeller, and a vane anemometer equipped in the ship. The estimator receives the rotational speed of the propeller detected by the propeller speed detector, and the information of the wind direction and the wind speed measured by the vane anemometer. Since many of general ships are equipped with such a propeller speed detector and a vane anemometer, by using them, the log velocity vector can be estimated without equipping the ship with an additional instrument to detect the log velocity vector.

**[Effect of the Invention]**

According to this disclosure, a velocity of a surface current can easily be calculated.

## BRIEF DESCRIPTION OF DRAWINGS

Fig. 1 is a block diagram illustrating a configuration of a surface current estimating device according to one embodiment of this disclosure.

Fig. 2 is a schematic view illustrating one example of a configuration of an estimator illustrated in Fig. 1.

Fig. 3 is a vector diagram illustrating a relationship among a ground velocity, a log velocity, and a surface current velocity.

Fig. 4 is a view illustrating how an output value from the estimator converges to the log velocity.

Fig. 5 is a block diagram illustrating a configuration of a surface current estimating device according to a modification.

Fig. 6 is a block diagram illustrating a configuration of a surface current estimating device according to a modification.

Fig. 7 is a view illustrating in detail an estimator illustrated in Fig. 6.

Fig. 8 is a block diagram illustrating a configuration of a surface current estimating device according to a modification.

Fig. 9 is a block diagram illustrating a configuration of a surface current estimating device according to a modification.

Fig. 10 is a block diagram illustrating a configuration of a surface current estimating device according to a modification.

Fig. 11 is a block diagram illustrating a configuration of a learning coefficient setting processor illustrated in Fig. 10.

Fig. 12 is a view schematically illustrating a table stored in a memory, and a self-organizing map SOM stored in association with each cell of the table.

Fig. 13 is a block diagram illustrating a configuration of a learning coefficient setting processor of a surface current estimating device according to a modification.

Fig. 14 is a view illustrating a table stored in a memory, and learning data stored in association with each cell of the table.

Fig. 15 is a block diagram illustrating a configuration of a surface current estimating device according to a modification.

Fig. 16 is a view illustrating one example of a distribution view of surface current velocities in a wide area, displayed in a display unit illustrated in Fig. 15.

Fig. 17 is a block diagram illustrating a configuration of a surface current estimating device according to a modification.

Fig. 18 is a block diagram illustrating a configuration of a surface current estimating device according to a modification.

Fig. 19 is a block diagram illustrating a configuration of a surface current estimating device according to a modification.

Fig. 20 is a schematic view illustrating complement of learning data.

Fig. 21 is a block diagram illustrating one example of a configuration of an ocean model estimating apparatus.

Fig. 22 is a block diagram illustrating one example of a configuration of a dangerousness determining apparatus.

## DETAILED DESCRIPTION OF THE INVENTION

A surface current estimating device 1 according to one embodiment of this disclosure is described with reference to the drawings. The surface current estimating device 1 according to this embodiment of this disclosure is equipped in a first ship (ship). The surface current estimating device 1 estimates a direction and magnitude of a surface current at a position of the first ship, in other words, a velocity vector of the surface current at the first ship position. The surface current estimating device 1 automatically obtains particular parameters (in this embodiment, a rotational speed of a propeller of the first ship, a true wind speed in a bow direction, and a true wind speed in a starboard direction) at every particular timing, and calculates a surface current velocity (surface current velocity vector) at the first ship position for every condition defined by a combination of values of the respective parameters. Note that, the surface current of this embodiment is a current within a depth range that is about a range from a sea surface to a bottom of the first ship.

[Overall Configuration]

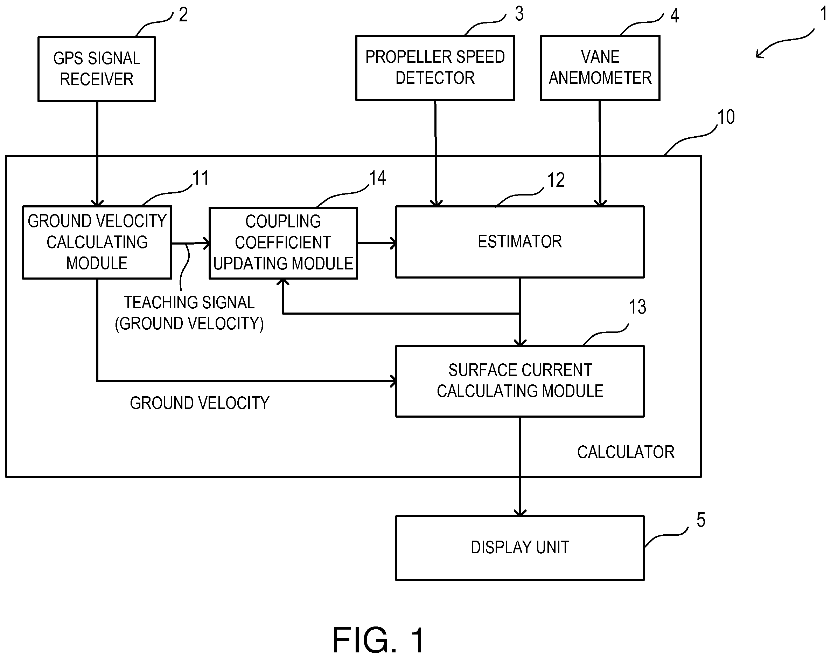

Fig. 1 is a block diagram illustrating a configuration of the surface current estimating device 1 according to this embodiment of this disclosure. As illustrated in Fig. 1, the surface current estimating device 1 includes a GPS signal receiver 2, a propeller speed detector 3, a vane anemometer 4, a calculator 10, and a display unit 5.

The GPS signal receiver 2 is provided as a GNSS signal receiver configured to receive GPS signals as navigation signals (GNSS signals) which are transmitted from navigation satellites (not illustrated). The GPS signal receiver 2 includes a GPS antenna, for example. The GPS signals received by the GPS signal receiver 2 (i.e., positional information of the first ship) is notified to the calculator 10 along with a received time point of the GPS signals.

Note that in this embodiment, the GPS signal receiver 2 is used as the GNSS signal receiver; however, without limiting to this, a receiver used in another GNSS system may be used. Here, GNSS is an abbreviation of Global Navigation Satellite Systems. This GNSS is a collective name for "GPS" administrated by the United States of America, "GALILEO" administrated by the European Union, "GLONASS" administrated by Russia, etc.

The propeller speed detector 3 detects a rotational speed per unit time of the propeller configured to produce a thrust of the first ship, and includes a sensor capable of detecting a rotational speed, for example. The rotational speed detected by the propeller speed detector 3 is notified to the calculator 10.

The vane anemometer 4 measures, as information of a wind direction and speed, the true wind speed in the bow direction and the true wind speed in the starboard direction. The vane anemometer 4 is disposed in the first ship where the surface current estimating device 1 according to this embodiment is equipped, at a location with no obstacle in its surrounding which blocks a wind. The true wind speed in the bow direction and the true wind speed in the starboard direction measured by the vane anemometer 4 are notified to the calculator 10.

The calculator 10 estimates a surface current at the first ship position (target location) at every particular timing, based on the various information notified by the GPS signal receiver 2, the propeller speed detector 3, and the vane anemometer 4. The calculator 10 includes a ground velocity calculating module 11, an estimator 12, a surface current calculating module 13, and a coupling coefficient updating module 14.

The ground velocity calculating module 11 calculates a ground velocity (ground velocity vector) of the first ship based on the positional information of the first ship and the acquired time point of the first ship positional information, which are notified from the GPS signal receiver 2. Specifically, the ground velocity calculating module 11 calculates the ground velocity of the first ship based on first ship positions of at least two timings and acquired time points of the positional information of the respective first ship positions. The ground velocity calculating module 11 notifies the ground speed calculated as above, to the surface current calculating module 13 and the coupling coefficient updating module 14.

The estimator 12 is configured to estimate a log velocity of the first ship. In this embodiment, the estimator 12 receives the rotational speed of the propeller of the first ship, which is detected by the propeller speed detector 3, and the true wind speed in the bow direction and the true wind speed in the starboard direction, which are measured by the vane anemometer. The estimator 12 outputs to the surface current calculating module 13 a value corresponding to a condition defined by a combination of these input values (a condition defined by a combination of a certain rotational speed, a certain true wind speed in the bow direction, and a certain true wind speed in the starboard direction) as the log velocity (log velocity vector, which is a log velocity in the bow direction and a log velocity in the starboard direction in this embodiment).

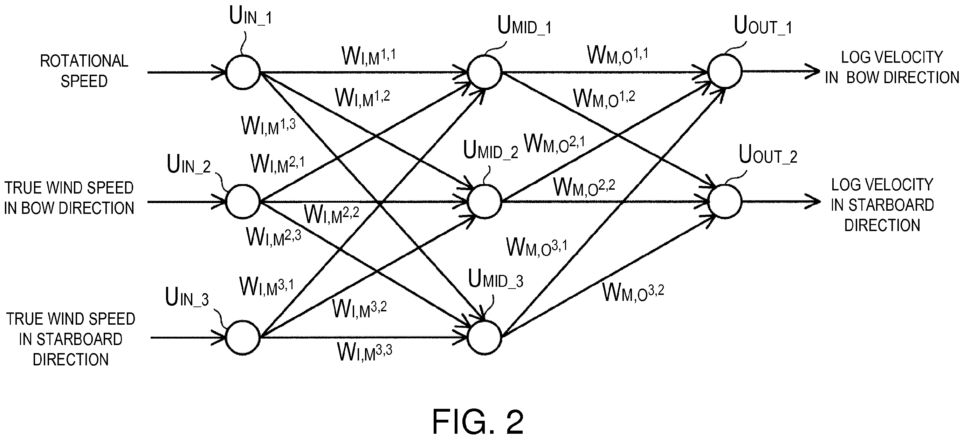

Fig. 2 is a schematic view illustrating one example of a configuration of the estimator 12. In this embodiment, the estimator 12 is configured using a commonly-known neural network. Specifically, the estimator 12 includes a plurality of input units $U_{IN\_1}$, $U_{IN\_2}$ and $U_{IN\_3}$ structuring an input layer, a plurality of middle units $U_{MID\_1}$, $U_{MID\_2}$ and $U_{MID\_3}$ structuring a hidden layer, and a plurality of output units $U_{OUT\_1}$ and $U_{OUT\_2}$ structuring an output layer. Note that, the configuration of the estimator 12 illustrated in Fig. 2 is merely an example, and the number of units in each layer, the number of hidden layers are not limited to those illustrated in Fig. 2.

In the estimator 12, when the input values (the rotational speed of the propeller, etc.) are inputted into the respective input units $U_{IN\_1}$, $U_{IN\_2}$ and $U_{IN-3}$, each of those input values is multiplied by a coupling coefficient $W_{I,M}$ and outputted to the middle units $U_{MID\_1}$, $U_{MID\_2}$ and $U_{MID\_3}$ of the hidden layer.

Each of the middle units $U_{MID\_1}$, $U_{MID\_2}$ and $U_{MID\_3}$ of the hidden layer adds up the inputted values to obtain a total, multiplies by a coupling coefficient $W_{M,O}$ a value obtained based on the total value, and outputs it to the output units $U_{OUT\_1}$ and $U_{OUT\_2}$. Each of the output units $U_{OUT\_1}$ and $U_{OUT\_2}$ adds up the inputted values to obtain a total, and outputs, as an output value, a value obtained based on the total value, to the surface current calculating module 13 and the coupling coefficient updating module 14. Note that, the values inputted into the estimator 12 are not necessarily the values of the parameter themselves, such as the rotational speed of the propeller, etc., and they may be numerical values which are in a one-to-one relationship with those parameters, respectively (e.g., a voltage value which changes in proportion to the rotational speed), etc.

In an initial state of the estimator 12, a suitable initial value is set for each coupling coefficient W. Further, the coupling coefficient W is updated by the coupling coefficient updating module 14 as needed. Specifically, the coupling coefficient W is updated by the coupling coefficient updating module 14 to reduce an error of each output value from the estimator 12 with respect to the ground velocity (teaching signal) calculated by the ground velocity calculating module 11. Thus, the output value from the estimator 12, although described later in detail, is converged to the log velocity of the first ship every time the coupling coefficient W is updated.

The surface current calculating module 13 calculates a surface current velocity (surface current velocity vector) that is a velocity of a surface current, based on the output values as the log velocity outputted from the estimator 12 and the ground velocity calculated by the ground velocity calculating module 11. Specifically, the surface current calculating module 13 calculates the surface current velocity by subtracting the log velocity from the ground velocity.

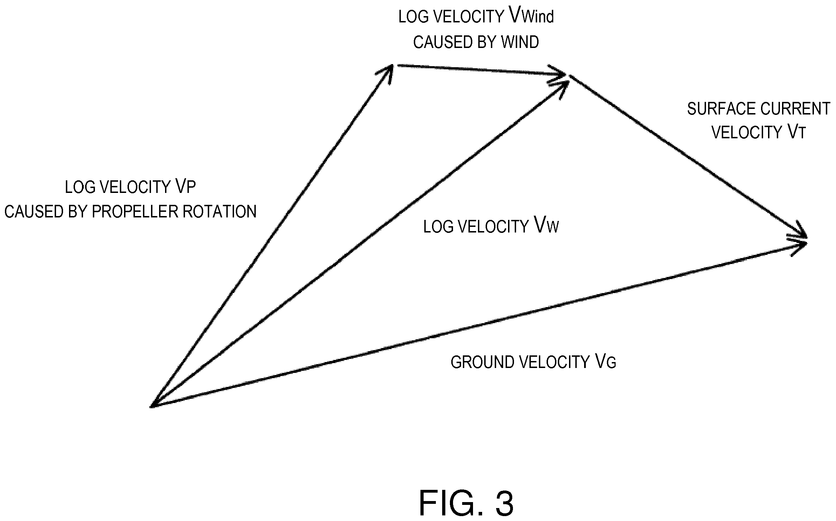

Fig. 3 is a vector diagram illustrating a relationship among the ground velocity vector $V_G$, the log velocity vector $V_W$, and the surface current velocity vector $V_T$. The ground velocity $V_G$ is a velocity over a ground surface, and the log velocity $V_W$ is a velocity over a water surface (sea surface). Further, the surface current is a water current in a surface zone of the sea. Therefore, the relationship among the ground velocity vector $V_G$, the log velocity vector $V_W$, and the surface current velocity vector $V_T$ can be expressed as illustrated in Fig. 3. Thus, the surface current calculating module 13 subtracts the log velocity $V_W$ from the ground velocity $V_G$ as described above to calculate the surface current velocity $V_T$.

The coupling coefficient updating module 14 updates each coupling coefficient W of the estimator 12 to reduce the error of each output value from the estimator 12 with respect to the ground velocity (teaching signal) calculated by the ground velocity calculating module 11. The coupling coefficient updating module 14 updates the coupling coefficient W by using a backpropagation method, for example.

The display unit 5 displays the direction and magnitude of the surface current calculated by the surface current calculating module 13. Thus, a user can learn the velocity of the surface current at the first ship position.

[Output Values from Estimator]

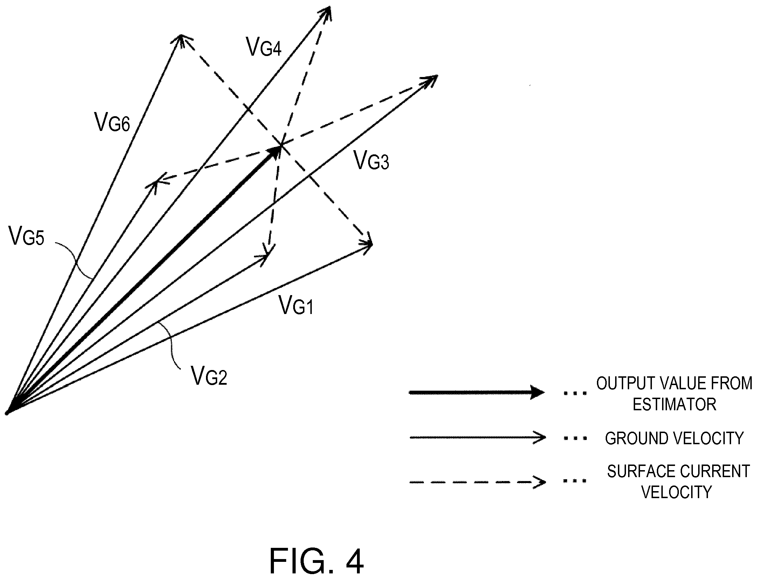

Fig. 4 is a view illustrating how each output value from the estimator 12 converges to the log velocity every time the coupling coefficient W of the estimator 12 is updated. As described above, each coupling coefficient W stored in the estimator 12 is updated by the coupling coefficient updating module 14 to reduce the error of the output value, which is outputted from the estimator 12 as needed, with respect to the ground velocity as the teaching signal calculated as needed.

The surface current varies in magnitude and direction depending on a marine area, time, a meteorological condition, etc. Thus, when the log velocity is the same (i.e., when the rotational speed of the propeller, the true wind speed in the bow direction, and the true wind speed in the starboard direction are the same), the ground velocity is considered to contain components of surface current velocities of various magnitudes and directions. Therefore, by averaging these components (averaging $V_{G1}$ to $V_{G6}$ in the case of Fig. 4), the surface current velocity components cancel out each other and the log velocity component remain. In other words, as the coupling coefficient W of the estimator 12 is updated to reduce the error of the output value of the estimator 12 with respect to the ground velocity, an influence of the surface current velocity components contained in the ground velocity gradually becomes smaller; therefore, the output value of the estimator 12 converges to the log velocity. Thus, in a stage where the learning process has sufficiently progressed (i.e., in a stage where the coupling coefficient has been updated a sufficient number of times), the output value from the estimator 12 can be estimated as the log velocity.

With the surface current estimating device 1, at every particular timing during travel of the first ship, the rotational speed is detected by the propeller speed detector 3, and the true wind speed in the bow direction and the true wind speed in the starboard direction are measured by the vane anemometer 4, and these information are outputted to the estimator 12 as needed. The estimator 12 generates the output value based on these information by using the coupling coefficient W updated as needed during travel of the first ship.

Note that, the propeller speed detector 3, the vane anemometer 4, and the estimator 12 of this embodiment constitute a log velocity estimating device configured to estimate the log velocity. Further, this log velocity estimating device may include the GPS signal receiver 2, the ground velocity calculating module 11, and the coupling coefficient updating module 14. By displaying on the display unit 5 the log velocity estimated by this log velocity estimating device (the output value of the estimator 12), the log velocity can even be notified to the user. Note that, similar to the case described above, the propeller speed detector, the vane anemometer, and the estimator of respective modifications described below may also be used as a log velocity estimating device configured to estimate a log velocity.

[Effects]

As described above, with the surface current estimating device 1 according to this embodiment, the surface current is calculated based on the ground velocity calculated by the ground velocity calculating module 11 and the log velocity estimated by the estimator 12. Thus, the surface current near the sea surface which causes a comparatively large influence on a movement of the ship can be estimated comparatively easily.

Therefore, in accordance with the surface current estimating device 1 according to this embodiment, the velocity of the surface current can easily be calculated.

Further, with the surface current estimating device 1, the estimator 12 is configured by using the neural network. Thus, the estimator 12 capable of outputting the log velocity can suitably be configured.

Further, with the surface current estimating device 1, the estimator 12 is updated to reduce the error of each output value of the estimator 12 with respect to the ground velocity calculated by the ground velocity calculating module 11. Thus, the estimator 12 provided with the learning function can be configured. Additionally, with the surface current estimating device 1, since a large amount of data required for estimating an accurate log velocity can be accumulated during the travel, a work of preparing learning data (data of a ground velocity under a certain condition) in advance can be omitted.

Further, with the surface current estimating device 1, since the estimator 12 is updated using the real-time data acquired while traveling, for example, a local surface current at the first ship position, which cannot be obtained from tidal current information distributed from an official organization, can be obtained.

Further, with the surface current estimating device 1, since the estimator 12 is updated using the real-time data described above, the estimator 12 is updated according to a condition of the ship (aged deterioration, fouling etc.) at a current time point. Thus, regardless of the ship condition, the surface current can accurately be estimated.

Further, with the surface current estimating device 1, the coupling coefficient W stored in the estimator 12 is updated to reduce the error of the output value of the estimator 12 with respect to the ground velocity calculated by the ground velocity calculating module 11. Thus, the estimator 12 can suitably be updated.

Further, with the surface current estimating device 1, by subtracting the log velocity from the ground velocity, the surface current velocity is calculated. Thus, the surface current velocity can be calculated more easily.

Further, with the surface current estimating device 1, by utilizing the GNSS which are widely spread, especially the GPS, the ground velocity can accurately be calculated. Additionally, since many of general ships are equipped with a GPS antenna, the ground velocity can be calculated without introducing an additional device etc.

Further, with the surface current estimating device 1, the estimator 12 estimates the log velocity in a condition defined by a combination of the respective values of the rotational speed of the propeller of the ship, the true wind speed in the bow direction, and the true wind speed in the starboard direction, which are the parameters which cause a great influence on the log velocity of the ship. Thus, by using a comparatively small number of parameters, the log velocity can efficiently be estimated. Additionally, since these parameters can be measured comparatively easily, the log velocity can easily be estimated.

Further, with the surface current estimating device 1, the rotational speed of the propeller, the true wind speed in the bow direction, and the true wind speed in the starboard direction are detected by the propeller speed detector 3 and the vane anemometer 4 equipped in the first ship. Since many of general ships are equipped with such a detector 3 and a vane anemometer 4, the surface current velocity can be estimated without equipping an additional sensor etc.

Moreover in this embodiment, the surface current estimating device 1 is equipped in the first ship. Thus, the surface current velocity near the first ship can be estimated.

Although the embodiment of this disclosure is described, this disclosure is not limited to this, and various changes may be applied without deviating from the scope of this disclosure.

[Modifications]

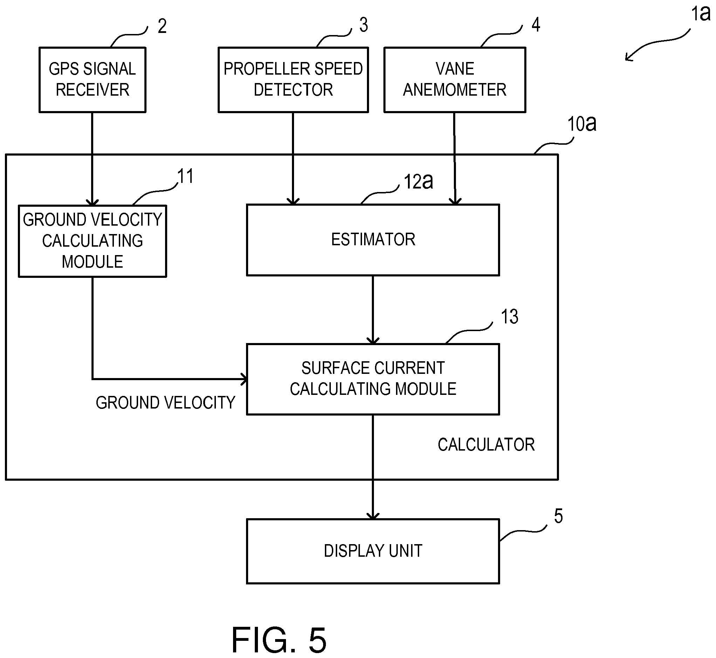

(1) Fig. 5 is a block diagram illustrating a configuration of a surface current estimating device 1a according to a modification. The surface current estimating device 1a according to this modification has, different from the surface current estimating device 1 illustrated in Fig. 1, a configuration in which the coupling coefficient updating module 14 is omitted. That is, the surface current estimating device 1a according to this modification does not have a learning function.

The surface current estimating device 1a according to this modification outputs, as a log velocity, an output value by an estimator 12a of which a coupling coefficient W is determined based on many learning data acquired in advance (data of a ground velocity under a certain condition). Also with such a configuration, similar to the above embodiment, the surface current can easily be calculated.

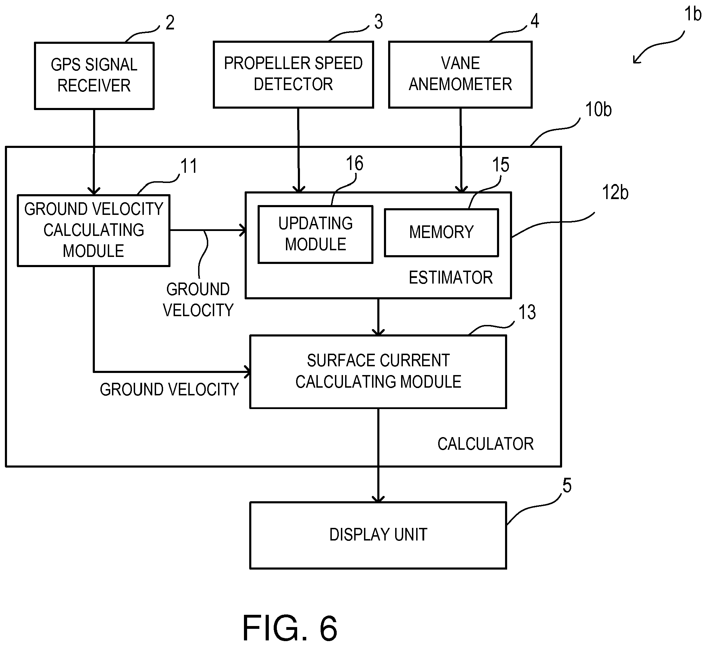

(2) Fig. 6 is a block diagram illustrating a configuration of a surface current estimating device 1b according to a modification. Compared to the surface current estimating device 1 according to the above embodiment, the surface current estimating device 1b according to this modification has a significantly different configuration of an estimator 12b. Specifically, the estimator 12b is not configured using a neural network, and has a configuration including a memory 15 and an updating module 16.

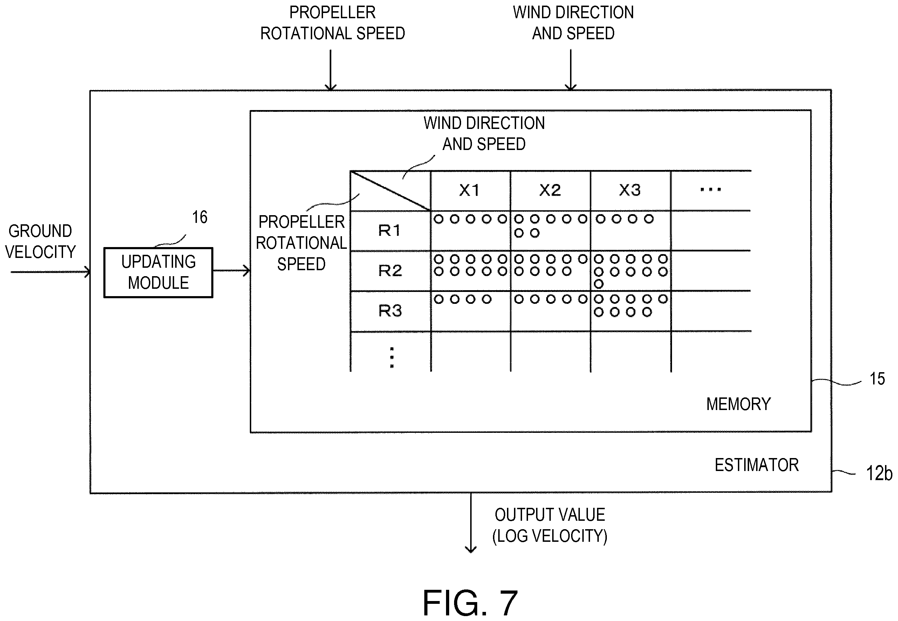

Fig. 7 is a view illustrating in detail the estimator 12b illustrated in Fig. 6.

The memory 15 stores a matrix table as illustrated in Fig. 7. This table stores ground velocities calculated under respective conditions (corresponding to respective cells of the table). Each condition is defined by a combination of a value of a wind direction and speed (X1, X2, X3, ...) and a value of a rotational speed of a propeller (R1, R2, R3, ...). In Fig. 7, a single value of a ground velocity is indicated with a single circular mark. Specifically, the memory 15 stores, for example, five values of ground velocity calculated when the value of the wind direction and speed is X1 and the value of the rotational speed is R1.

Once the estimator 12b receives the rotational speed detected by the propeller speed detector 3 (e.g., R2) and the wind direction and speed measured by the vane anemometer 4 (e.g., X3), the estimator 12b calculates an average value of the ground velocities contained in the cell where the rotational speed is R2 and the wind direction and speed is X3 (eleven values in the case of Fig. 7). Further, the estimator 12b outputs the average value as an output value.

As described above using Fig. 4, by averaging the ground velocities under a certain condition (a condition defined by a combination of a certain rotational speed and a certain wind direction and speed), surface current velocity components contained in the ground velocities cancel out each other, and thus, the average value becomes a value close to a log velocity. Therefore, the log velocity can appropriately be estimated also by the estimator 12b according to this modification.

The updating module 16 updates the table stored in the memory 15, by using a ground velocity calculated at a timing at which a rotational speed and a wind direction and speed inputted into the estimator 12b are detected. Specifically, the ground velocity calculated at a particular rotational speed (e.g., R3) and a particular wind direction and speed (e.g., X2) is added to a cell defined by R3 and X2. By performing this operation as needed, learning data is accumulated even while traveling, and a log velocity can be estimated more accurately. In other words, the estimator 12b according to this modification also has a learning function. As a result, a surface current velocity can be calculated more accurately.

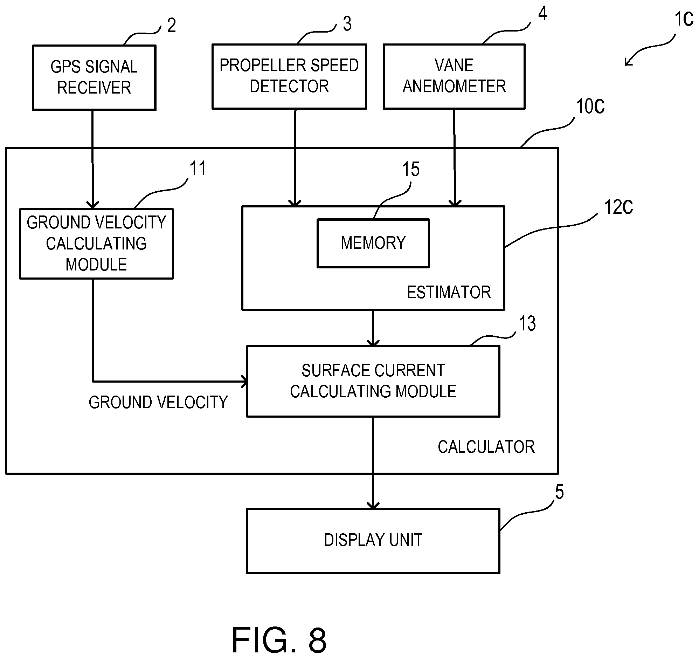

Note that, by configuring this modification to omit the updating module 16, a surface current estimating device 1c which does not have the learning function (see Fig. 8) can be configured. In this case, a plurality of leaning data acquired in advance (each data corresponds to a single circular mark in Fig. 7) needs to be stored in the memory 15.

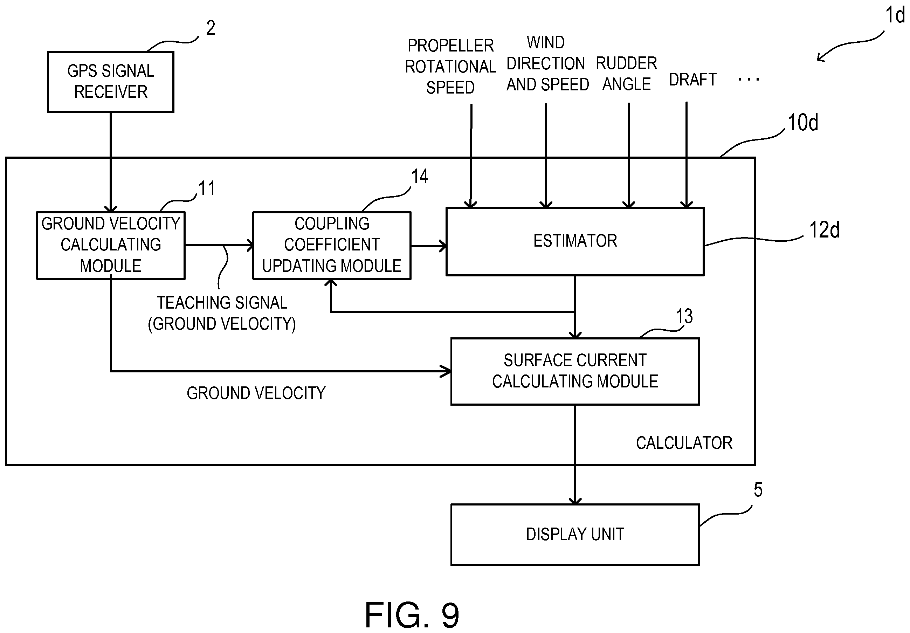

(3) Fig. 9 is a block diagram illustrating a configuration of a surface current estimating device 1d according to a modification. In this modification, as input values of an estimator 12d, in addition to the rotational speed of the propeller, the true wind speed in the bow direction, and the true wind speed in the starboard direction, a rudder angle, a draft (a distance to a water surface from a bottom of a ship in a state of floating on water), etc. are inputted. Further, the estimator 12d outputs, as an output value, a value corresponding to a condition defined by a combination of respective values of these parameters. Thus, a larger number of parameters can be taken into consideration as parameters which influence a log velocity. Therefore, the log velocity can be obtained more accurately.

Note that, although not illustrated in Fig. 9, the parameters which are inputted into the estimator 12d may include information of a wave, a roll angle of the ship, a pitch angle of the ship, an amount of heave of the ship, information of a hydrographic condition, information of a meteorological phenomenon, positional information, etc. Thus, an even more accurate log velocity can be obtained.

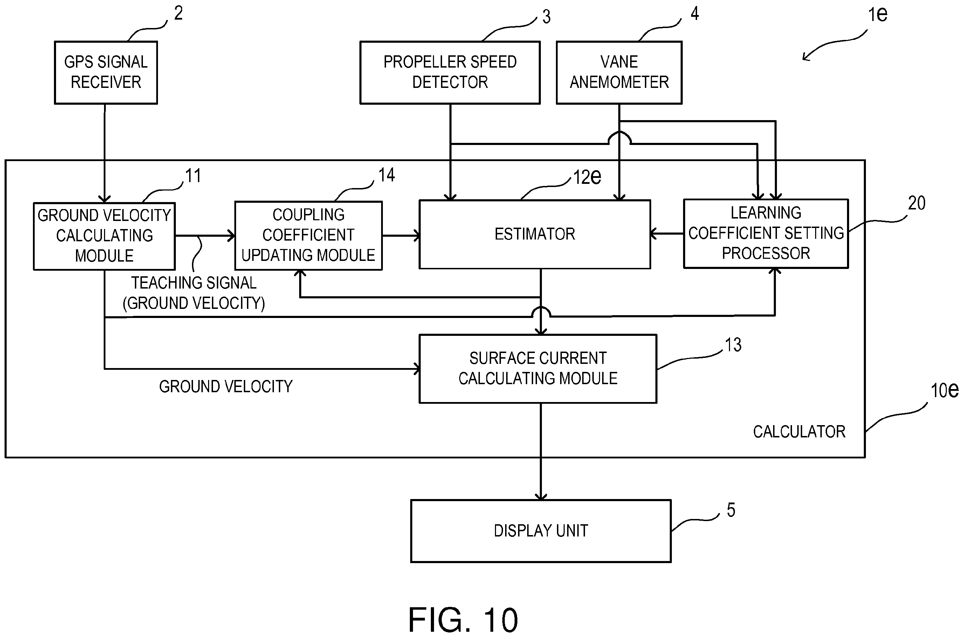

(4) Fig. 10 is a block diagram illustrating a configuration of a surface current estimating device 1e according to a modification. The surface current estimating device 1e according to this modification further includes a learning coefficient setting processor 20.

An estimator 12e, similar to the case of the above embodiment, is configured using a neural network and such that a coupling coefficient is updated as needed by so-called supervised learning. With the surface current estimating device 1e, an error between an output value from the estimator 12e and a teaching signal (ground velocity) is calculated. Then, the surface current estimating device 1e updates the coupling coefficient W while propagating the error as a learning signal, from a unit on an output layer side to a unit on an input layer side. A correction amount of the coupling coefficient is given by the following Equation 1.

$$\Delta W_{i,j}{}^{n,n-1}(t)= \eta \delta_i{}^n X_j{}^{n-1} + \alpha \Delta W_{i,j}{}^{n,n-1}(t-1) \quad ... (1)$$

In Equation 1, $\Delta W_{ij}{}^{n,n-1}(t)$ is a correction amount on a weight of coupling between a unit j of an (n-1)th layer and a unit i of an n-th layer, $\eta$ is a learning coefficient, $\delta_i{}^n$ is a learning signal to be returned back to each unit of the (n-1)th layer from the unit i of the n-th layer, $X_j{}^{n-1}$ is an output value of the unit j of the (n-1)th layer, $\alpha$ is a stabilizing coefficient, $\Delta W_{ij}{}^{n,n-1}(t-1)$ is a previous correction amount. Note that, the (n-1)th layer is one layer on the input side of the n-th layer.

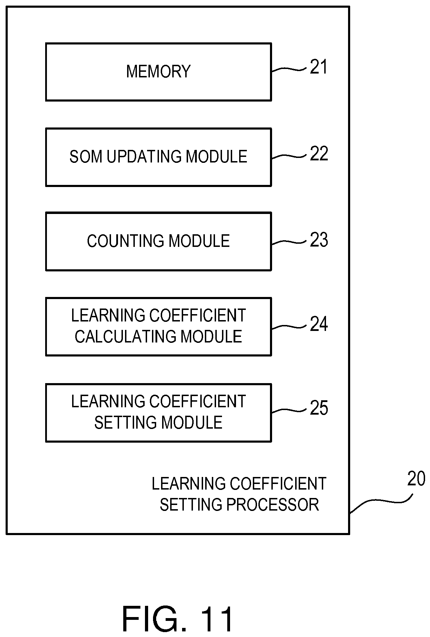

Fig. 11 is a block diagram illustrating a configuration of the learning coefficient setting processor 20. The learning coefficient setting processor 20 sets the learning coefficient in Equation 1 as needed. As illustrated in Fig. 11, the learning coefficient setting processor 20 has a memory 21, an SOM updating module 22, a counting module 23, a learning coefficient calculating module 24, and a learning coefficient setting module 25.

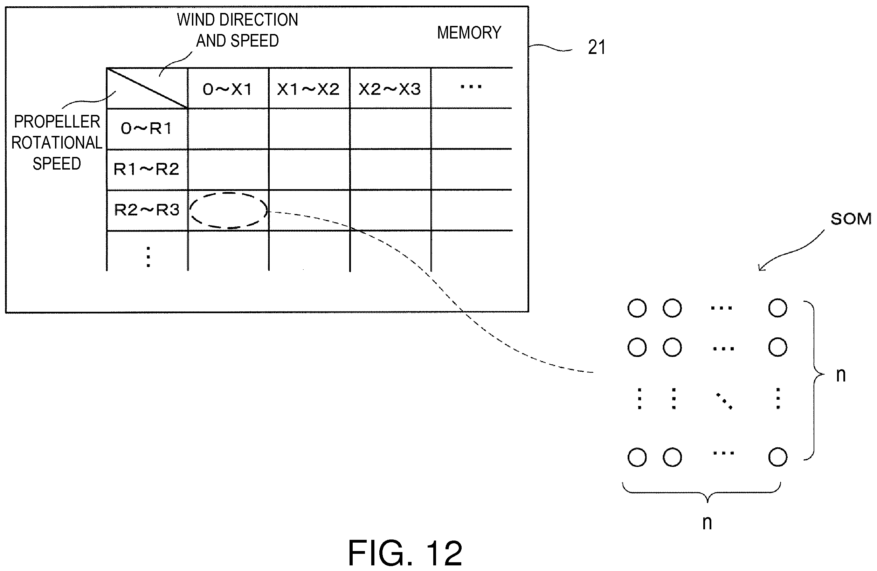

Fig. 12 is a view schematically illustrating a table stored in the memory 21, and a self-organizing map SOM stored in association with each cell of the table. As illustrated in Fig. 12, the memory 21 stores a table sectioned for every particular propeller rotational speed and every particular wind speed and direction in a grid pattern. Each cell of this table stores a corresponding self-organizing map SOM. Each self-organizing map SOM of this modification is a two-dimensional SOM formed with an n×n number of units. Each unit stores a reference vector of the same dimension as that of an input vector. In an initial state (a state where the learning is not performed), a suitable reference vector is set into the unit.

The SOM updating module 22 updates the SOM according to the input vector (a vector formed based on a rotational speed of a propeller, a wind direction and speed, a ground velocity, etc. which are inputted at every particular timing). Specifically, the SOM updating module 22 updates as below, the SOM stored in the cell including the inputted rotational speed and the inputted wind direction and speed.

Specifically, by using a unit with a shortest Euclidean distance from the input vector as a winner unit, the SOM updating module 22 updates a reference vector stored in the winner unit and reference vectors stored in units around the winner unit, based on the following Equation 2.

$$m_i(t+1)= m_i(t)+h_i(t)[x(t)-m_i(t)] \quad ... (2)$$

Note that, $m_i$ is the reference vector, $x(t)$ is the input vector, and $h_i$ is a neighborhood function expressed by $c\times exp(-dis^2/\alpha^2)$. In the neighborhood function, c is a learning rate coefficient, and $dis=|x-m_c|$. Here, $m_c$ is a reference vector that minimizes a Euclidean distance from $x(t)$.

The SOM updating module 22 updates as needed the self-organizing map SOM by the input vector inputted as needed, by using the Equation 2 described above.

The counting module 23 counts the number of units having a reference vector of which difference (Euclidean distance) from the input vector becomes a certain threshold or below.

The learning coefficient calculating module 24 calculates an inverse of the value counted by the counting module 23, to be the learning coefficient. Specifically, when the count value is high (when the number of similar input data is large), the learning coefficient becomes low, and when the count value is low (when the number of similar input data is small), the learning coefficient becomes high.

The learning coefficient setting module 25 notifies to the estimator 12e the value calculated by the learning coefficient calculating module 24, and sets it to be the learning coefficient $\eta$ in Equation 1. The estimator 12e updates the coupling coefficient based on Equation 1 by using the learning coefficient $\eta$, and then calculates a log velocity vector based on the updated coupling coefficient.

According to this modification, when a large number of similar learning data (input vector) is accumulated, the learning coefficient becomes low. In this case, as apparent from the Equation 1 described above, the correction amount $\Delta W_{i,j}^{n,n-1}(t)$ of the coupling coefficient becomes small. On the other hand, when the similar learning data is not accumulated or only a small number of similar learning data is accumulated, the learning coefficient becomes high. In this case, as apparent from Equation 1, the correction amount of the coupling coefficient becomes large. Thus, according to this modification, imbalance of the output values from the estimator due to the accumulation of the large number of similar learning data can be reduced.

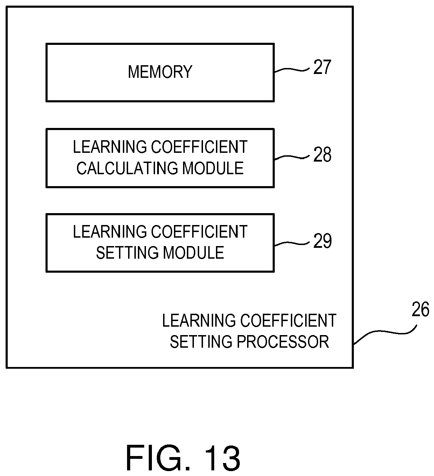

(5) Fig. 13 is a block diagram illustrating a configuration of a learning coefficient setting processor 26 of a surface current estimating device according to a modification. Similar to the case of the learning coefficient setting processor 20 of the modification described above, the learning coefficient setting processor 26 according to this modification sets the learning coefficient $\eta$ of Equation 1 which is used by an estimator configured using a neural network. However, the learning coefficient setting processor 26 according to this modification has a different configuration from the learning coefficient setting processor 20 of the modification described above. As illustrated in Fig. 13, the learning coefficient setting processor 26 of this modification has a memory 27, a learning coefficient calculating module 28, and a learning coefficient setting module 29.

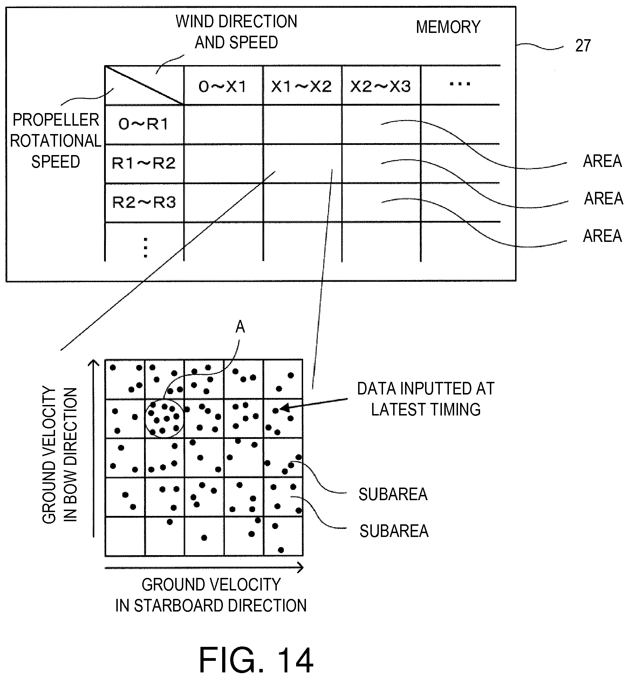

Fig. 14 is a view illustrating a table stored in the memory 27, and learning data stored in association with each cell (each area) of the table. As illustrated in Fig. 14, similar to the case of the modification described above, the memory 27 stores a table sectioned for every particular propeller rotational speed and every particular wind speed and direction in a grid pattern. In this modification, the learning data stored in each area is mapped corresponding to the ground velocity of each learning data. Specifically, as illustrated in Fig. 14, in a map having a plurality of subareas sectioned for every particular ground velocity in the bow direction and every particular ground velocity in the starboard direction in a grid pattern, each learning data is mapped corresponding to the ground velocity.

The learning coefficient calculating module 28 sets, as the learning coefficient, a value that is obtained by normalizing an inverse of a value calculated by dividing the number of learning data (four in the case of Fig. 14) stored in a subarea which includes learning data inputted at a latest timing, by the number of learning data stored in a subarea with a largest number of learning data (ten in a subarea A in the case of Fig. 14) among all the subareas of the area having the subarea which includes the learning data inputted at the latest timing. Further, similar to the learning coefficient setting module 25 of the above modification, the learning coefficient setting module 29 notifies to an estimator the learning coefficient set by the learning coefficient calculating module 28 and sets it to be the learning coefficient $\eta$ in Equation 1. Also with such a configuration, the learning coefficient can suitably be set.

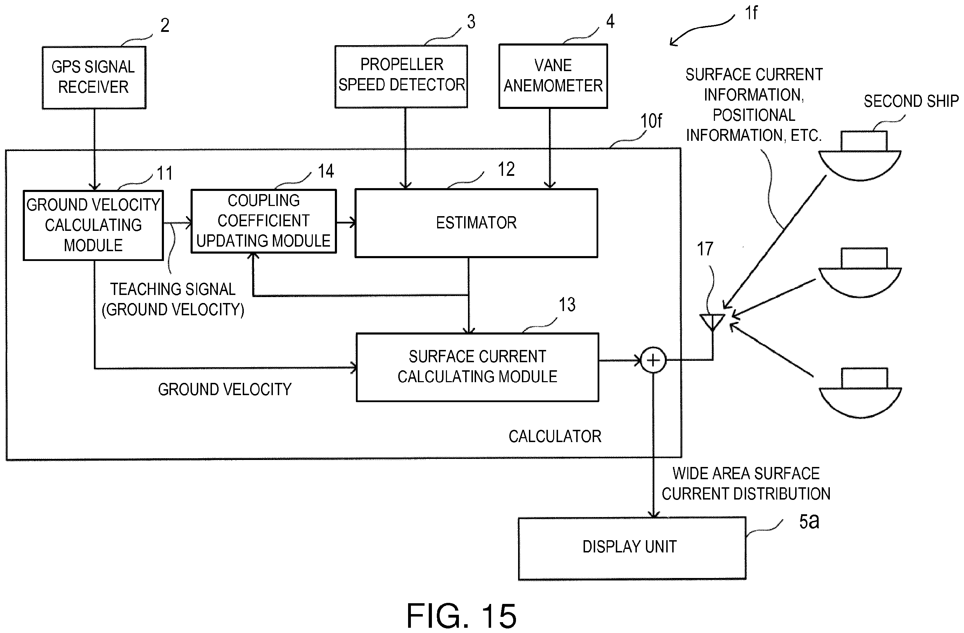

(6) Fig. 15 is a block diagram illustrating a configuration of a surface current estimating device If according to a modification. The surface current estimating device If according to this modification is configured to be capable of obtaining, not only a surface current velocity near a first ship, but also a surface current velocity in another marine area. The surface current estimating device If according to this modification includes a second ship information receiver 17.

The second ship information receiver 17 receives positional information of a second ship traveling on the sea, information of a surface current velocity at a location of the second ship, etc. from the second ship. The second ship information receiver 17 includes an antenna, for example. The second ship information receiver 17 receives, from the second ship as needed, surface current velocity information at each location which the second ship traveling on the sea has passed.

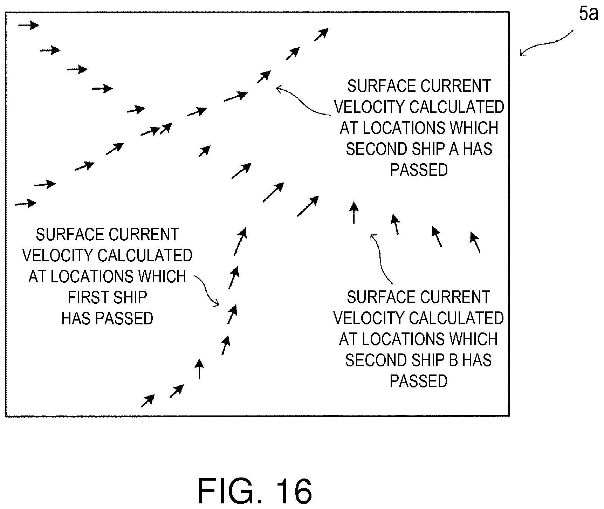

Fig. 16 is a view illustrating one example of a distribution view of surface current velocities in a wide area, displayed in a display unit 5a of this modification. As illustrated in Fig. 16, the display unit 5a of this modification displays surface current velocities calculated at locations which second ships have passed in a particular marine area. In the example illustrated in Fig. 16, the direction of the arrow displayed on the display screen indicates a direction of the surface current, and the size of the arrow indicates a velocity of the surface current.

As above, according to the surface current estimating device If according to this modification, not only the surface current velocity near the first ship position, but also surface current velocities at locations which the first ship has not passed can be obtained. Further, by obtaining the wide area surface current distribution as above, a surface current at a location which is expected that the first ship will pass can be obtained, and the surface current can be utilized as effective information for estimating a time of arrival to a target location and calculating a fuel consumption.

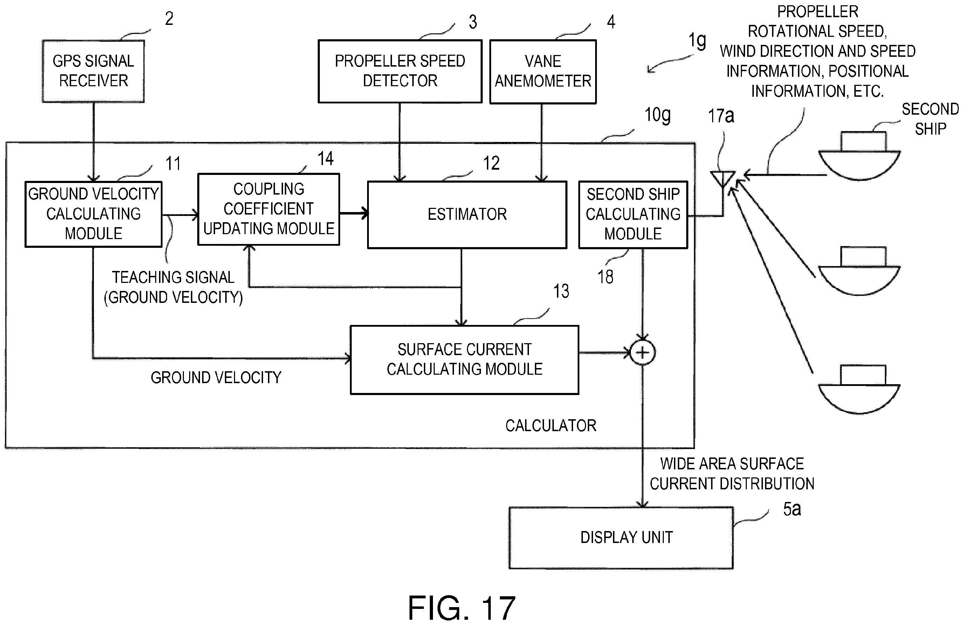

(7) Fig. 17 is a block diagram illustrating a configuration of a surface current estimating device 1g according to a modification. Compared to the surface current estimating device If described with reference to Fig. 15, the surface current estimating device 1g according to this modification is different that it includes a second ship calculating module 18 configured to calculate a surface current velocity of a second ship.

In this modification, a second ship information receiver 17a acquires a rotational speed of a propeller, wind direction and speed information, positional information, etc. of the second ship as needed. Further, the second ship calculating module 18 calculates a surface current velocity at a location which the second ship has passed, based on these information. The thus calculated surface current velocity vector at the location which the second ship has passed is displayed on the display unit 5a along with a surface current velocity vector at a location which the first ship has passed (see Fig. 16).

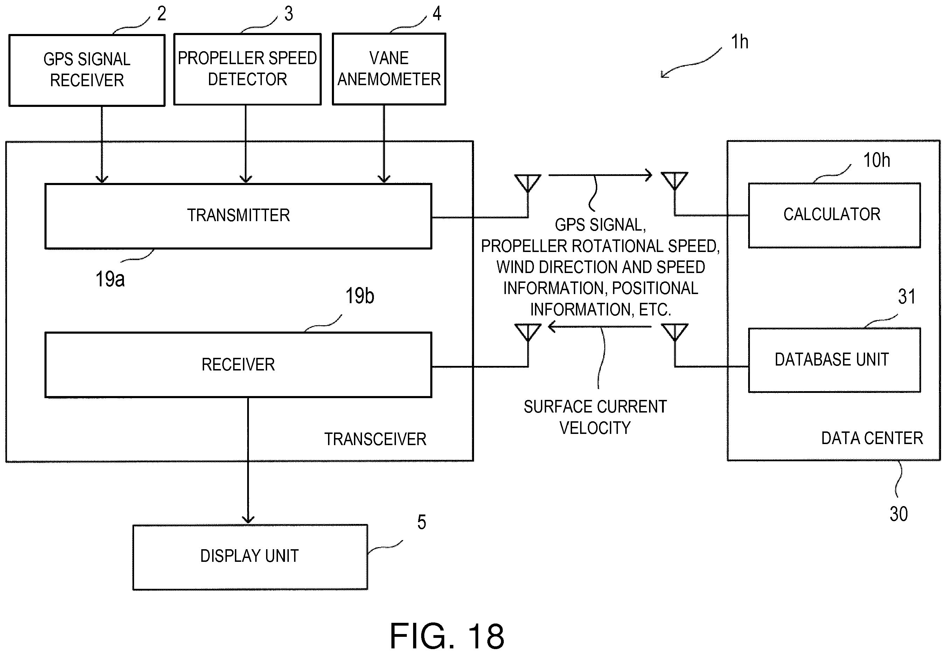

(8) Fig. 18 is a block diagram illustrating a configuration of a surface current estimating device 1h according to a modification. In this modification, a GPS signal receiver 2 etc. which constitute a part of the surface current estimating device 1h, and a calculator 10h are equipped at separate locations. Specifically, in this modification, the GPS signal receiver 2, a propeller speed detector 3, and a vane anemometer 4 are equipped in a first ship, and the calculator 10h is provided to a data center 30 which is placed on land, for example. Further, the surface current estimating device 1h according to this modification includes a transmitter 19a and a receiver 19b which are equipped in the first ship.

The transmitter 19a transmits various data detected by the GPS signal receiver 2, the propeller speed detector 3, and the vane anemometer 4, to the data center 30 via antennas. In the calculator 10h of the data center 30, based on the various data, a surface current velocity is calculated similarly to the case of the above embodiment. The calculator 10h calculates surface current velocities at respective locations which the first ship has passed, and stores them in a database unit 31. The receiver 19b receives the surface current velocity data stored in the database unit 31. This data is displayed on a display unit 5.

In this modification, different from the case of the above embodiment, a calculator with a comparatively high calculation load can be provided at a different location from the first ship. Thus, even without equipping the calculator in the first ship, the surface current velocity at the first ship position can be estimated.

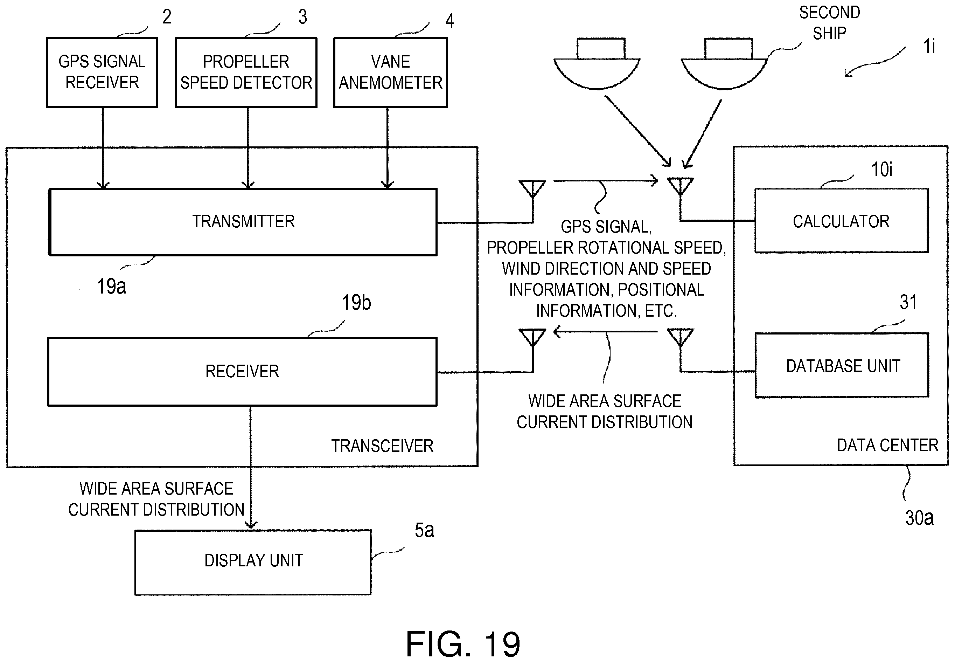

Note that in this modification, by collecting information of second ships to the data center 30 and also calculating surface current velocities at positions of the second ships, a wide area surface current distribution can be obtained (see Fig. 19).

(9) Moreover, in each of the embodiment and modifications described above, when the accumulation of learning data is not sufficient, the learning data may be complemented.

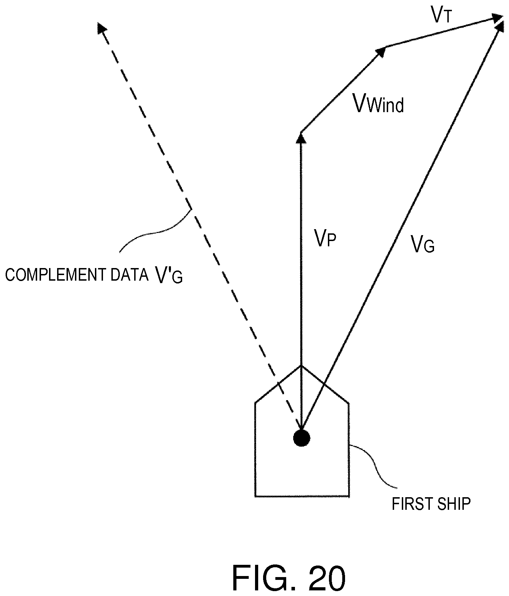

Fig. 20 is a schematic view illustrating complement of the learning data. Since a ship has a substantially laterally symmetrical shape, wind force characteristics (a traveling speed of the ship caused by the wind direction and speed) are estimated to be laterally symmetric. Specifically, for example, between a case where a ship traveling under a certain condition receives a wind from the port quarter at an angle of 45 degrees and a case where the ship receives a wind from the starboard quarter at an angle of 45 degrees (wind speeds are the same), the traveling directions are estimated to be laterally symmetric. Therefore, with reference to Fig. 20, for example, in a case where a propeller rotational speed is a particular speed, a wind direction is on the port quarter at the angle of 45 degrees, and a wind speed is a particular speed, if the ground velocity is $V_G$, the data may be complemented as follows based on the learning data. Specifically, as learning data for when the propeller rotational speed and the wind speed are the same as the learning data of the above case and the wind direction is on the starboard quarter at an angle of 45 degrees, a laterally inverted vector $V'_G$ may be complemented. By complementing the learning data as above, for example, even in an initial stage where the accumulation of learning data is not sufficient, an accurate surface current can be estimated.

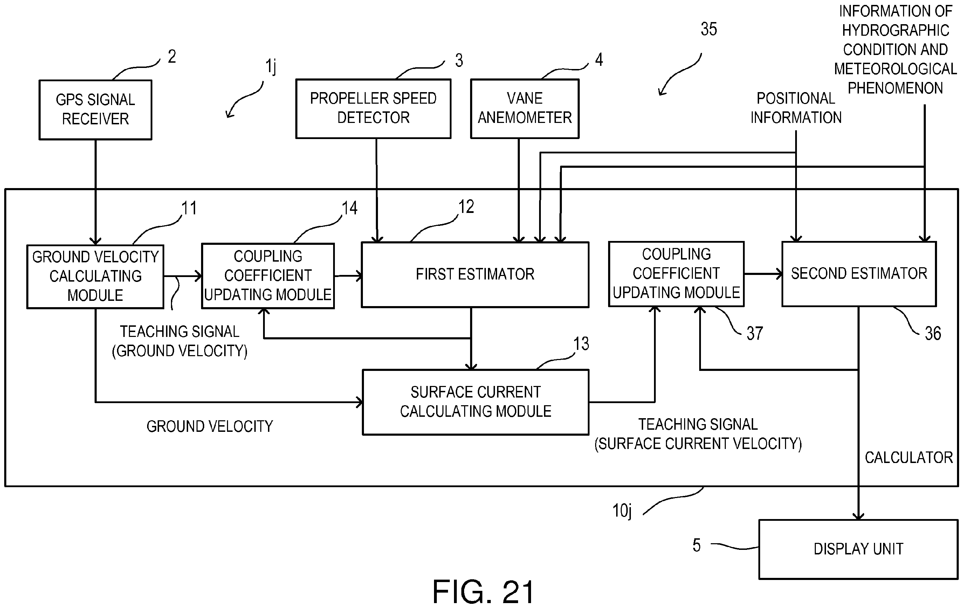

(10) Fig. 21 is a block diagram illustrating one example of an ocean model estimating apparatus 35. The ocean model estimating apparatus 35 is a device including the surface current estimating device described above, and estimates a surface current velocity specific to each location of an ocean, in other words, a location-specific ocean model, according to information of a hydrographic condition and meteorological phenomenon.

As illustrated in Fig. 21, the ocean model estimating apparatus 35 includes, in addition to the surface current estimating device described above, a second estimator 36 and a coupling coefficient updating module 37.

Similar to the case of the estimator 12 according to the above embodiment, the second estimator 36 is configured using a neural network. Further, the second estimator 36 is configured to output, as an output value, a surface current velocity according to inputted positional information and the hydrographic condition and meteorological phenomenon information. Note that, examples of the hydrographic condition include a height of tide, atmospheric pressure, and a seawater temperature.

The coupling coefficient updating module 37 compares the surface current velocity calculated by the surface current calculating module 13 with the output value estimated by the second estimator 36, and updates a coupling coefficient of the second estimator 36 to reduce an error therebetween.

According to the ocean model estimating apparatus 35 configured as described above, since the hydrographic condition and meteorological phenomenon information are used as input values, the location-specific surface current velocity according to the hydrographic condition and the meteorological phenomenon can be obtained. Further, by calculating the location-specific surface current velocity at each location on the sea and accumulating them as data, for example, an ocean model for over the world can be structured.

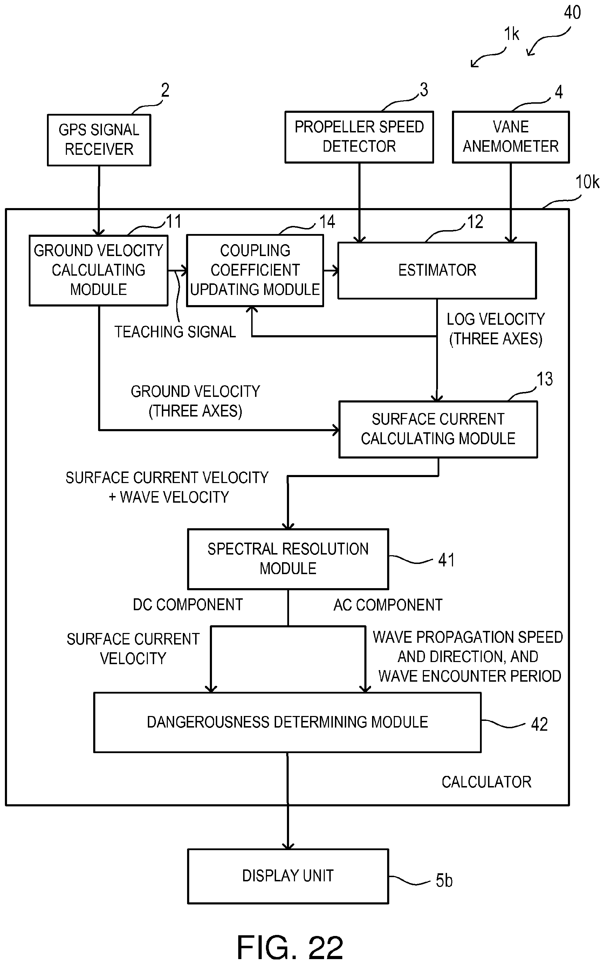

(11) Fig. 22 is a block diagram illustrating one example of a configuration of a dangerousness determining apparatus 40. The dangerousness determining apparatus 40 is an apparatus including the surface current estimating device described above, and determines a dangerousness of a wave relative to a first ship.

As illustrated in Fig. 22, the dangerousness determining apparatus 40 includes, in addition to the surface current estimating device described above, a spectral resolution module 41 and a dangerousness determining module 42.

Note that, with the surface current estimating device illustrated in Fig. 22, the ground velocity calculating module 11 calculates a ground velocity in three axial directions (directions in a horizontal plane and a vertical direction), and the estimator 12 calculates a log velocity in the three axial directions. Thus, the surface current calculating module 13 calculates a surface current velocity containing a wave component.

The spectral resolution module 41 resolves the surface current velocity containing the wave component, which is calculated by the surface current calculating module 13, into a DC component (direct current component) and an AC component (alternate current component). The spectral resolution module 41 outputs these components to the dangerousness determining module 42.

The dangerousness determining module 42 determines the respective output values from the spectral resolution module 41 comprehensively to determine the dangerousness of the wave relative to the first ship. Specifically, for example, the dangerousness determining module 42 determines that the dangerousness is low if values of the DC and AC components are comparatively low, and determines that the dangerousness is high if the values of the DC and AC components are comparatively high. The determination result is outputted to a display unit 5b.

According to the dangerousness determining device 40 configured as above, without providing an additional device, such as a transducer, to a bottom of the first ship, a dangerousness of a wave relative to the first ship can be obtained based on a sea surface condition obtained using the GPS signal receiver 2 etc. which are equipped in a general ship.

Note that, with the dangerousness determining device 40 illustrated in Fig. 22, the dangerousness may be determined by further referring to roll (sway in left-and-right directions with respect to front-and-rear directions of the ship), pitch (sway in the front-and-rear directions with respect to the left-and-right directions of the ship), etc.

## DESCRIPTION OF REFERENCE NUMERALS

| | |
|---|---|
| 1, 1a, 1b, 1c, ..., 1k | Surface Current Estimating Device |
| 11 | Ground Velocity Calculating Module |
| 12, 12a, 12b, ..., 12e | Estimator |
| 13 | Surface Current Calculating Module |

## Claims

1. A surface current estimating device (1) that estimates a surface current velocity vector that is a velocity vector of a surface current at a target location where a ship is located on the sea, comprising:

a ground velocity calculating module (11) configured to calculate a ground velocity vector of the ship at the target location; and

a surface current calculating module (13) configured to calculate the surface current velocity vector of the target location based on the ground velocity vector and a log velocity vector of the ship; **characterized in that**:

the device comprises an estimator (12) configured to receive a rotational speed of a propeller of the ship from a propeller speed detector, and information of a wind direction and a wind speed from a vane anemometer, and to estimate and to output, as the log velocity vector of the ship, a value corresponding to a velocity over the water surface, based on a combination of the received values; and

the surface current calculating module (13) is configured to calculate the surface current velocity vector of the target location based on the output value as the log velocity vector estimated by the estimator (12) and the ground velocity vector calculated by the ground velocity calculating module (11).

2. The surface current estimating device (1) of claim 1, wherein the estimator (12) is configured using a neural network.

3. The surface current estimating device (1) of claim 1 or 2, further comprising an updating module (14) configured to compare the output value from the estimator (12) with the ground velocity vector calculated by the ground velocity calculating module (11), and update the estimator (12) to reduce an error between the output value and the ground velocity vector.

4. The surface current estimating device (1) of claim 3, wherein the estimator (12) is configured using a neural network, wherein the estimator (12) has at least one input unit configured to receive the rotational speed of the propeller and the information of a wind direction and a wind speed, and an output unit configured to output the output value that is the log velocity vector,

wherein a value to be outputted from the input unit of the neural network is multiplied by a coupling coefficient and then transmitted to the output unit, and

wherein the updating module (14) compares the output value with the ground velocity vector that is a teaching signal, and updates the coupling coefficient to reduce an error between the output value and the teaching signal.

5. The surface current estimating device (1) of any one of claims 1 to 4, wherein the surface current calculating module (13) calculates the surface current velocity vector by subtracting the log velocity vector estimated by the estimator (12) from the ground velocity vector calculated by the ground velocity calculating module (11).

6. The surface current estimating device (1) of any one of claims 1 to 5, further comprising a GNSS signal receiver (2) equipped in the ship and configured to receive GNSS signals,

wherein the ground velocity calculating module (11) calculates the ground velocity vector based on the GNSS signals received by the GNSS signal receiver (2) and time points at which the GNSS signals are received.

7. The surface current estimating device (1) of any one of claims 1 to 6, wherein the estimator (12) is configured to receive at least one further parameter which includes one of: a rudder angle of the ship, a draft of the ship, information of a wave, a roll angle of the ship, a pitch angle of the ship, an amount of heave of the ship, information of a hydrographic condition, information of a meteorological phenomenon, and positional information.

8. The surface current estimating device (1) of claim 7, further comprising:

a propeller speed detector (3) configured to detect the rotational speed of the propeller; and

a vane anemometer (4) equipped in the ship,

wherein the estimator (12) receives at least the rotational speed of the propeller detected by the propeller speed detector (3), and the information of the wind direction and the wind speed measured by the vane anemometer (4).

9. A ship equipped with the surface current estimating device (1) of any one of claims 1 to 8.

10. A surface current estimating system, comprising:

the surface current estimating device (1) of any one of claims 1 to 7, wherein the surface current estimating device (1) is at a location different from that of the ship;

a transmitter (19a) located in the ship and configured to transmit to the surface current estimating device (1) the rotational speed of a propeller of the ship from a propeller speed detector, and information of a wind direction and a wind speed from a vane anemometer; and
a receiver (19b) located in the ship and configured to receive the surface current velocity vector of the target location, the surface current velocity vector calculated by the surface current estimating device (1).

11. The surface current estimating system of claim 10, wherein the surface current estimating device (1) also calculates a surface current velocity vector of a location where a second ship is located, based on the rotational speed of a propeller, and information of a wind direction and a wind speed, regarding the second ship, and
wherein the receiver (19b) also receives the surface current velocity vector of the location where the second ship is located, the surface current velocity vector calculated by the surface current estimating device (1).

12. The surface current estimating system of claim 11, further comprising a display unit (5) configured to display a desired area on the sea and capable of displaying the surface current velocity vector of the target location of the first ship within the desired area, and the surface current velocity vector of the location where the second ship is located within the desired area.

13. An ocean model estimating apparatus (35), comprising one of the surface current estimating device (1) of any one of claims 1 to 9 and the surface current estimating system of claim 10 or 11,
wherein the estimator (12) of the one of the surface current estimating device (1) and the surface current estimating system is provided as a first estimator (12), and
further comprising a second estimator (36) configured using a neural network and configured to receive positional information of a first ship, information of a current hydrographic condition, and information of a meteorological phenomenon, output, as an output value, a value corresponding to one of conditions, and be updated to reduce an error between a surface current velocity vector and the output value, each of the conditions defined by a combination of the received information, the surface current velocity vector calculated as a teaching signal by the one of the surface current estimating device (1) and the surface current estimating system.

14. A dangerousness determining apparatus (40), comprising:

one of the surface current estimating device (1) of any one of claims 1 to 9 and the surface current estimating system of claim 10 or 11; and
a determining module (42) configured to determine a dangerousness of a wave relative to a first ship based on at least the surface current velocity vector estimated by the one of the surface current estimating device (1) and the surface current estimating system.

15. A method of estimating a surface current velocity vector that is a velocity vector of a surface current at a target location where a ship is located on the sea, the method comprising:

calculating a ground velocity vector of the ship at the target location using a ground velocity calculating module (11); and
calculating the surface current velocity vector of the target location based on the ground velocity vector and a log velocity vector of the ship using a surface current calculating module (13);

**characterized by**:

receiving, at an estimator (12), a rotational speed of a propeller of the ship from a propeller speed detector, and information of a wind direction and a wind speed from a vane anemometer;
estimating and outputting, as the log velocity vector of the ship, a value corresponding to a velocity over the water surface, based on a combination of the received values; and
calculating the surface current velocity vector of the target location based on the output value as the log velocity vector estimated by the estimator (12) and the ground velocity vector calculated by the ground velocity calculating module (11).

**Patentansprüche**

1. Oberflächenströmungsschätzvorrichtung (1), die einen Oberflächenströmungsgeschwindigkeitsvektor schätzt, der ein Geschwindigkeitsvektor einer Oberflächenströmung an einem Zielort ist, an dem sich ein Schiff auf dem Meer befindet, mit

einem Grundgeschwindigkeitsberechnungsmodul (11), das zum Berechnen eines Grundgeschwindigkeitsvektors des Schiffes an dem Zielort konfiguriert ist; und

einem Oberflächenströmungsberechnungsmodul (13), das zum Berechnen des Oberflächenströmungsgeschwindigkeitsvektors des Zielortes basierend auf dem Grundgeschwindigkeitsvektor und einem Loggeschwindigkeitsvektors des Schiffes konfiguriert ist;

**dadurch gekennzeichnet, dass**

die Vorrichtung einen Schätzer (12) aufweist, der so konfiguriert ist, dass er eine Drehzahl eines Propellers des Schiffes von einem Propellerdrehzahldetektor und Informationen über eine Windrichtung und eine Windgeschwindigkeit von einem Flügelradanemometer empfängt und einen einer Geschwindigkeit über der Wasseroberfläche entsprechenden Wert als Loggeschwindigkeitsvektor des Schiffes basierend auf einer Kombination der empfangenen Werte schätzt und ausgibt; und

das Oberflächenströmungsberechnungsmodul (13) so konfiguriert ist, dass es den Oberflächenströmungsgeschwindigkeitsvektor des Zielortes basierend auf dem Ausgabewert als dem von dem Schätzer (12) geschätzten Loggeschwindigkeitsvektor und dem von dem Grundgeschwindigkeitsberechnungsmodul (11) berechneten Grundgeschwindigkeitsvektor berechnet.

2. Oberflächenströmungsschätzvorrichtung (1) nach Anspruch 1, bei der der Schätzer (12) unter Verwendung eines neuronalen Netzes konfiguriert ist.

3. Oberflächenströmungsschätzvorrichtung (1) nach Anspruch 1 oder 2, ferner mit einem Aktualisierungsmodul (14), das so konfiguriert ist, dass es den Ausgabewert von dem Schätzer (12) mit dem von dem Grundgeschwindigkeitsberechnungsmodul (11) berechneten Grundgeschwindigkeitsvektor vergleicht und den Schätzer (12) aktualisiert, um einen Fehler zwischen dem Ausgabewert und dem Grundgeschwindigkeitsvektor zu verringern.

4. Oberflächenströmungsschätzvorrichtung (1) nach Anspruch 3, bei der der Schätzer (12) unter Verwendung eines neuronalen Netzes konfiguriert ist,

wobei der Schätzer (12) mindestens eine Eingabeeinheit hat, die so konfiguriert ist, dass sie die Drehzahl des Propellers und die Informationen über eine Windrichtung und eine Windgeschwindigkeit empfängt, und eine Ausgabeeinheit hat, die so konfiguriert ist, dass sie den Ausgabewert ausgibt, der der Loggeschwindigkeitsvektor ist, wobei ein von der Eingabeeinheit des neuronalen Netzwerkes auszugebender Wert mit einem Kopplungskoeffizient multipliziert und dann zu der Ausgabeeinheit übermittelt wird, und

wobei das Aktualisierungsmodul (14) den Ausgabewert mit dem Grundgeschwindigkeitsvektor, der ein Lernsignal ist, vergleicht und den Kopplungskoeffizient aktualisiert, um einen Fehler zwischen dem Ausgabewert und dem Lernsignal zu verringern.

5. Oberflächenströmungsschätzvorrichtung (1) nach irgendeinem der Ansprüche 1 bis 4, bei der das Oberflächenströmungsberechnungsmodul (13) den Oberflächenströmungsgeschwindigkeitsvektor durch Subtrahieren des von dem Schätzer (12) geschätzten Loggeschwindigkeitsvektors von dem von dem Grundgeschwindigkeitsberechnungsmodul (11) berechneten Grundgeschwindigkeitsvektor berechnet.

6. Oberflächenströmungsschätzvorrichtung (1) nach irgendeinem der Ansprüche 1 bis 5, ferner mit einem GNSS-Signalempfänger (2), der in dem Schiff eingerichtet ist und zum Empfangen von GNSS-Signalen konfiguriert ist, wobei das Grundgeschwindigkeitsberechnungsmodul (11) den Grundgeschwindigkeitsvektor basierend auf den von dem GNSS-Signalempfänger (2) empfangenen GNSS-Signalen und Zeitpunkten, in denen die GNSS-Signale empfangen werden, berechnet.

7. Oberflächenströmungsschätzvorrichtung (1) nach irgendeinem der Ansprüche 1 bis 6, bei der der Schätzer (12) so konfiguriert ist, dass er mindestens einen weiteren Parameter empfängt, der eines von Folgendem enthält: einen Ruderwinkel des Schiffes, einen Tiefgang des Schiffes, Informationen über eine Welle, einen Rollwinkel des Schiffes, einen Stampfwinkel des Schiffes, eine Größe des horizontalen Hebens und Senkens des Schiffes, Informationen über eine hydrographische Bedingung, Informationen über ein meteorologisches Phänomen, und Positionsinformationen.

8. Oberflächenströmungsschätzvorrichtung (1) nach Anspruch 7, ferner mit:

einem Propellerdrehzahldetektor (3), der zum Ermitteln der Drehzahl des Propellers konfiguriert ist; und einem Flügelradanemometer (4), das in dem Schiff eingerichtet ist, wobei der Schätzer (12) mindestens die von dem Propellerdrehzahldetektor (3) ermittelte Drehzahl des Pro-

**EP 3 112 877 B1**

pellers und die Informationen über die Windrichtung und die Windgeschwindigkeit, die von dem Flügelradanemometer (4) gemessen wird, empfängt.

9. Schiff, das mit der Oberflächenströmungsschätzvorrichtung (1) nach irgendeinem der Ansprüche 1 bis 8 ausgerüstet ist.

10. Oberfiächenströmungsschätzsystem mit
der Oberflächenströmungsschätzvorrichtung (1) nach irgendeinem der Ansprüche 1 bis 7, wobei die Oberflächenströmungsschätzvorrichtung (1) an einem Ort ist, der verschieden von dem des Schiffes ist;
einem Sender (19a), der in dem Schiff ist und so konfiguriert ist, dass er an die Oberflächenströmungsschätzvorrichtung (1) die Drehzahl eines Propellers des Schiffes von einem Propellerdrehzahldetektor und Informationen über eine Windrichtung und eine Windgeschwindigkeit von einem Flügelradanemometer überträgt; und
einem Empfänger (19a), der sich in dem Schiff befindet und so konfiguriert ist, dass er den Oberflächenströmungsgeschwindigkeitsvektor des Zielortes empfängt, wobei der Oberflächenströmungsgeschwindigkeitsvektor von der Oberflächenströmungsschätzvorrichtung (1) berechnet wird.

11. Oberflächenströmungsschätzsystem nach Anspruch 10, bei dem die Oberflächenströmungsschätzvorrichtung (1) auch einen Oberflächenströmungsgeschwindigkeitsvektor eines Ortes, an dem sich ein zweites Schiff befindet, basierend auf der Drehzahl eines Propellers und Informationen über eine Windrichtung und eine Windgeschwindigkeit bezüglich des zweiten Schiffes berechnet, und
bei dem der Empfänger (19b) auch den Oberflächenströmungsgeschwindigkeitsvektor des Ortes, an dem sich das zweite Schiff befindet, empfängt, wobei der Oberflächenströmungsgeschwindigkeitsvektor von der Oberflächenströmungsschätzvorrichtung (1) berechnet wird.

12. Oberflächenströmungsschätzsystem nach Anspruch 11, ferner mit einer Anzeigeeinheit (5), die zum Anzeigen eines gewünschten Gebietes auf dem Meer konfiguriert ist und in der Lage ist, den Oberflächenströmungsgeschwindigkeitsvektor des Zielortes des ersten Schiffes innerhalb des gewünschten Gebietes und den Oberflächenströmungsgeschwindigkeitsvektor des Ortes, an dem sich das zweite Schiff innerhalb des gewünschten Gebietes befindet, anzuzeigen.

13. Ozeanmodellschätzgerät (35) mit der Oberflächenströmungsschätzvorrichtung (1) nach irgendeinem der Ansprüche 1 bis 9 oder dem Oberflächenströmungsschätzsystem nach Anspruch 10 oder 11,
bei dem der Schätzer (12) der Oberflächenströmungsschätzvorrichtung (1) oder des Oberflächenströmungsschätzsystems als erster Schätzer (12) vorgesehen ist, und
ferner mit einem zweiten Schätzer (36), der unter Verwendung eines neuronalen Netzes konfiguriert ist und so konfiguriert ist, dass er Positionsinformationen über ein erstes Schiff, Informationen über eine momentane hydrographische Bedingung und Informationen über ein meteorologisches Phänomen empfängt, als Ausgabewert einen Wert ausgibt, der einer der Bedingungen entspricht, und aktualisiert wird, um einen Fehler zwischen einem Oberflächenströmungsgeschwindigkeitsvektor und dem Ausgabewert zu verringern, wobei jede der Bedingungen durch eine Kombination der empfangenen Informationen definiert wird, der Oberflächenströmungsgeschwindigkeitsvektor als Lernsignal von der Oberflächenströmungsschätzvorrichtung (1) oder dem Oberflächenströmungsschätzsystem berechnet wird.

14. Gefährlichkeitsbestimmungsgerät (40) mit
der Oberflächenströmungsschätzvorrichtung (1) nach irgendeinem der Ansprüche 1 bis 9 oder dem Oberflächenströmungsschätzsystem nach Anspruch 10 oder 11; und
einem Bestimmungsmodul (42), das so konfiguriert ist, dass es eine Gefährlichkeit einer Welle bezüglich eines ersten Schiffes basierend auf mindestens dem Oberflächenströmungsgeschwindigkeitsvektor bestimmt, der von der Oberflächenströmungsschätzvorrichtung (1) oder dem Oberflächenströmungsschätzsystem geschätzt wird.

15. Verfahren zum Schätzen eines Oberflächenströmungsgeschwindigkeitsvektors, der ein Geschwindigkeitsvektor einer Oberflächenströmung an einem Zielort ist, an dem sich ein Schiff auf dem Meer befindet, wobei das Verfahren umfasst:

Berechnen eines Grundgeschwindigkeitsvektors des Schiffes an dem Zielort unter Verwendung eines Grundgeschwindigkeitsberechnungsmoduls (11); und
Berechnen des Oberflächenströmungsgeschwindigkeitsvektors des Zielortes basierend auf dem Grundgeschwindigkeitsvektor und einem Loggeschwindigkeitsvektor des Schiffes unter Verwendung eines Oberflächenströmungsberechnungsmoduls (13);

**gekennzeichnet durch**

an einem Schätzer (12) Empfangen einer Drehzahl eines Propellers eines Schiffes von einem Propellerdrehzahldetektor und Informationen über eine Windrichtung und eine Windgeschwindigkeit von einem Flügelradanemometer;
Schätzen und Ausgeben eines einer Geschwindigkeit über der Wasseroberfläche entsprechenden Wertes als Loggeschwindigkeitsvektor des Schiffes basierend auf einer Kombination der empfangenen Werte; und
Berechnen des Oberflächenströmungsgeschwindigkeitsvektors des Zielortes basierend auf dem Ausgabewert als Loggeschwindigkeitsvektor, der von dem Schätzer (12) geschätzt wird, und des Grundgeschwindigkeitsvektors, der von dem Grundgeschwindigkeitsberechnungsmodul (11) berechnet wird.

**Revendications**

1. Dispositif d'estimation de courant de surface (1) qui estime un vecteur de vitesse de courant de surface qui est un vecteur de vitesse d'un courant de surface à un emplacement cible où un navire est situé sur la mer, comprenant :

un module de calcul de vitesse par rapport au sol (11) configuré pour calculer un vecteur de vitesse par rapport au sol du navire à l'emplacement cible ; et
un module de calcul de courant de surface (13) configuré pour calculer le vecteur de vitesse de courant de surface de l'emplacement cible sur la base du vecteur de vitesse par rapport au sol et d'un vecteur de vitesse de loch du navire ;

**caractérisé en ce que** :

le dispositif comprend un estimateur (12) configuré pour recevoir une vitesse de rotation d'une hélice du navire à partir d'un détecteur de vitesse d'hélice, et des informations d'une direction de vent et d'une vitesse de vent à partir d'un anémomètre à roue à aubes, et pour estimer et pour sortir, en tant que vecteur de vitesse de loch du navire, une valeur correspondant à une vitesse sur la surface de l'eau, sur la base d'une combinaison des valeurs reçues ; et
le module de calcul de courant de surface (13) est configuré pour calculer le vecteur de vitesse de courant de surface de l'emplacement cible sur la base de la valeur de sortie en tant que vecteur de vitesse de loch estimé par l'estimateur (12) et du vecteur de vitesse par rapport au sol calculé par le module de calcul de vitesse par rapport au sol (11).

2. Dispositif d'estimation de courant de surface (1) selon la revendication 1, dans lequel l'estimateur (12) est configuré en utilisant un réseau neuronal.

3. Dispositif d'estimation de courant de surface (1) selon la revendication 1 ou 2, comprenant en outre un module de mise à jour (14) configuré pour comparer la valeur de sortie provenant de l'estimateur (12) avec le vecteur de vitesse par rapport au sol calculé par le module de calcul de vitesse par rapport au sol (11), et mettre à jour l'estimateur (12) pour réduire une erreur entre la valeur de sortie et le vecteur de vitesse par rapport au sol.

4. Dispositif d'estimation de courant de surface (1) selon la revendication 3, dans lequel l'estimateur (12) est configuré en utilisant un réseau neuronal,
dans lequel l'estimateur (12) comporte au moins une unité d'entrée configurée pour recevoir la vitesse de rotation de l'hélice et les informations d'une direction de vent et d'une vitesse de vent, et une unité de sortie configurée pour sortir la valeur de sortie qui est le vecteur de vitesse de loch,
dans lequel une valeur à délivrer à partir de l'unité d'entrée du réseau neuronal est multipliée par un coefficient de couplage et ensuite transmise à l'unité de sortie, et
dans lequel le module de mise à jour (14) compare la valeur de sortie avec le vecteur de vitesse par rapport au sol qui est un signal d'apprentissage, et met à jour le coefficient de couplage pour réduire une erreur entre la valeur de sortie et le signal d'apprentissage.

5. Dispositif d'estimation de courant de surface (1) selon l'une quelconque des revendications 1 à 4, dans lequel le module de calcul de courant de surface (13) calcule le vecteur de vitesse de courant de surface en soustrayant le vecteur de vitesse de loch estimé par l'estimateur (12) du vecteur de vitesse par rapport au sol calculé par le module de calcul de vitesse par rapport au sol (11).

6. Dispositif d'estimation de courant de surface (1) selon l'une quelconque des revendications 1 à 5, comprenant en outre un récepteur de signaux de GNSS (2) monté dans le navire et configuré pour recevoir des signaux de GNSS, dans lequel le module de calcul de vitesse par rapport au sol (11) calcule le vecteur de vitesse par rapport au sol sur la base des signaux de GNSS reçus par le récepteur de signaux de GNSS (2) et des instants auxquels les signaux de GNSS sont reçus.

7. Dispositif d'estimation de courant de surface (1) selon l'une quelconque des revendications 1 à 6, dans lequel l'estimateur (12) est configuré pour recevoir au moins un autre paramètre qui comprend l'un : d'un angle de barre du navire, d'un tirant d'eau du navire, d'informations d'une vague, d'un angle de roulis du navire, d'un angle de tangage du navire, d'une quantité de mouvement vertical du navire, d'informations de condition hydrographique, d'informations de phénomène météorologique et d'informations de position.

8. Dispositif d'estimation de courant de surface (1) selon la revendication 7, comprenant en outre :

   un détecteur de vitesse d'hélice (3) configuré pour détecter la vitesse de rotation de l'hélice ; et
   un anémomètre à roue à aubes (4) monté dans le navire,
   dans lequel l'estimateur (12) reçoit au moins la vitesse de rotation de l'hélice détectée par le détecteur de vitesse d'hélice (3), et les informations de la direction de vent et de la vitesse de vent mesurées par l'anémomètre à roue à aubes (4).

9. Navire équipé du dispositif d'estimation de courant de surface (1) selon l'une quelconque des revendications 1 à 8.

10. Système d'estimation de courant de surface, comprenant :

   le dispositif d'estimation de courant de surface (1) de l'une quelconque des revendications 1 à 7, dans lequel le dispositif d'estimation de courant de surface (1) est à un emplacement différent de celui du navire ;
   un émetteur (19a) situé dans le navire et configuré pour transmettre, au dispositif d'estimation de courant de surface (1), la vitesse de rotation d'une hélice du navire provenant d'un détecteur de vitesse d'hélice, et les informations d'une direction de vent et d'une vitesse de vent provenant d'un anémomètre à roue à aubes ; et
   un récepteur (19b) situé dans le navire et configuré pour recevoir le vecteur de vitesse de courant de surface de l'emplacement cible, le vecteur de vitesse de courant de surface étant calculé par le dispositif d'estimation de courant de surface (1).

11. Système d'estimation de courant de surface selon la revendication 10, dans lequel le dispositif d'estimation de courant de surface (1) calcule également un vecteur de vitesse de courant de surface d'un emplacement où un deuxième navire est situé, sur la base de la vitesse de rotation d'une hélice, et d'informations d'une direction de vent et d'une vitesse de vent, concernant le deuxième navire, et
dans lequel le récepteur (19b) reçoit également le vecteur de vitesse de courant de surface de l'emplacement où le deuxième navire est situé, le vecteur de vitesse de courant de surface étant calculé par le dispositif d'estimation de courant de surface (1).

12. Système d'estimation de courant de surface selon la revendication 11, comprenant en outre une unité d'affichage (5) configurée pour afficher une zone souhaitée sur la mer et capable d'afficher le vecteur de vitesse de courant de surface de l'emplacement cible du premier navire dans la zone souhaitée, et le vecteur de vitesse de courant de surface de l'emplacement où le deuxième navire est situé dans la zone souhaitée.

13. Appareil d'estimation de modèle d'océan (35), comprenant l'un du dispositif d'estimation de courant de surface (1) de l'une quelconque des revendications 1 à 9 et du système d'estimation de courant de surface de la revendication 10 ou 11,
dans lequel l'estimateur (12) dudit un du dispositif d'estimation de courant de surface (1) et du système d'estimation de courant de surface est prévu en tant que premier estimateur (12), et
comprenant en outre un deuxième estimateur (36) configuré en utilisant un réseau neuronal et configuré pour recevoir les informations de position d'un premier navire, les informations d'une condition hydrographique actuelle, et les informations d'un phénomène météorologique, sortir, en tant que valeur de sortie, une valeur correspondant à l'une des conditions, et être mis à jour pour réduire une erreur entre un vecteur de vitesse de courant de surface et la valeur de sortie, chacune des conditions étant définie par une combinaison des informations reçues, le vecteur de vitesse de courant de surface étant calculé en tant que signal d'apprentissage par ledit un du dispositif d'estimation de courant de surface (1) et du système d'estimation de courant de surface.

14. Appareil de détermination de dangerosité (40), comprenant :

l'un de dispositif d'estimation de courant de surface (1) de l'une quelconque des revendications 1 à 9 et du système d'estimation de courant de surface de la revendication 10 ou 11 ; et
un module de détermination (42) configuré pour déterminer une dangerosité d'une vague en relation avec un premier navire au moins sur la base du vecteur de vitesse de courant de surface estimé par ledit un du dispositif d'estimation de courant de surface (1) et du système d'estimation de courant de surface.

15. Procédé pour estimer un vecteur de vitesse de courant de surface qui est un vecteur de vitesse d'un courant de surface à un emplacement cible où un navire est situé sur la mer, le procédé comprenant :

le calcul d'un vecteur de vitesse par rapport au sol du navire à l'emplacement cible en utilisant un module de calcul de vitesse par rapport au sol (11) ; et
le calcul du vecteur de vitesse de courant de surface de l'emplacement cible sur la base du vecteur de vitesse par rapport au sol et d'un vecteur de vitesse de loch du navire en utilisant un module de calcul de courant de surface (13) ;

**caractérisé par** :

la réception, au niveau d'un estimateur (12), d'une vitesse de rotation d'une hélice du navire à partir d'un détecteur de vitesse d'hélice, et d'informations d'une direction de vent et d'une vitesse de vent à partir d'un anémomètre à roue à aubes ;
l'estimation et la sortie, en tant que vecteur de vitesse de loch du navire, d'une valeur correspondant à une vitesse sur la surface de l'eau, sur la base d'une combinaison des valeurs reçues ; et
le calcul du vecteur de vitesse de courant de surface de l'emplacement cible sur la base de la valeur de sortie en tant que vecteur de vitesse de loch estimé par l'estimateur (12) et du vecteur de vitesse par rapport au sol calculé par le module de calcul de vitesse par rapport au sol (11).

FIG. 1

FIG. 2

EP 3 112 877 B1

LOG VELOCITY V<sub>Wind</sub>
CAUSED BY WIND

SURFACE CURRENT
VELOCITY V<sub>T</sub>

LOG VELOCITY V<sub>P</sub>
CAUSED BY PROPELLER ROTATION

LOG VELOCITY V<sub>W</sub>

GROUND VELOCITY V<sub>G</sub>

FIG. 3

FIG. 4

⋯⋯→ OUTPUT VALUE FROM ESTIMATOR

⋯⋯→ GROUND VELOCITY

⋯⋯→ SURFACE CURRENT VELOCITY

```
                    2                    3                    4                           1a
        ┌──────────────┐    ┌──────────────┐    ┌──────────────┐
        │  GPS SIGNAL  │    │PROPELLER SPEED│   │    VANE      │
        │   RECEIVER   │    │   DETECTOR    │   │ ANEMOMETER   │
        └──────────────┘    └──────────────┘    └──────────────┘
                                                                    10a
        ┌─────────────────────────────────────────────────────────┐
        │                 11                 12a                    │
        │  ┌────────────────┐      ┌──────────────────────┐        │
        │  │ GROUND VELOCITY│      │                      │        │
        │  │  CALCULATING   │      │      ESTIMATOR       │        │
        │  │     MODULE     │      │                      │        │
        │  └────────────────┘      └──────────────────────┘        │
        │                                                13        │
        │                          ┌──────────────────────┐        │
        │                          │   SURFACE CURRENT    │        │
        │         GROUND VELOCITY  │  CALCULATING MODULE  │        │
        │                          └──────────────────────┘        │
        │                                            CALCULATOR     │
        └─────────────────────────────────────────────────────────┘
                                  ┌──────────────────────┐      5
                                  │     DISPLAY UNIT     │
                                  └──────────────────────┘
```

FIG. 5

FIG. 6

EP 3 112 877 B1

FIG. 7

FIG. 8

EP 3 112 877 B1

FIG. 9

FIG. 10

MEMORY — 21

SOM UPDATING MODULE — 22

COUNTING MODULE — 23

LEARNING COEFFICIENT
CALCULATING MODULE — 24

LEARNING COEFFICIENT
SETTING MODULE — 25

LEARNING COEFFICIENT
SETTING PROCESSOR — 20

# FIG. 11

FIG. 12

FIG. 13

| WIND DIRECTION AND SPEED | | | | MEMORY |
|---|---|---|---|---|
| PROPELLER ROTATIONAL SPEED | 0~X1 | X1~X2 | X2~X3 | ··· |
| 0~R1 | | | | |
| R1~R2 | | | | |
| R2~R3 | | | | |
| ⋮ | | | | |

DATA INPUTTED AT LATEST TIMING

A

GROUND VELOCITY IN BOW DIRECTION

GROUND VELOCITY IN STARBOARD DIRECTION

SUBAREA

SUBAREA

AREA

AREA

AREA

27

FIG. 14

FIG. 15

EP 3 112 877 B1

SURFACE CURRENT
VELOCITY CALCULATED
AT LOCATIONS WHICH
SECOND SHIP A HAS
PASSED

SURFACE CURRENT
VELOCITY CALCULATED
AT LOCATIONS WHICH
FIRST SHIP
HAS PASSED

SURFACE CURRENT
VELOCITY CALCULATED
AT LOCATIONS WHICH
SECOND SHIP B HAS
PASSED

5a

FIG. 16

FIG. 17

FIG. 18

FIG. 19

FIG. 20

FIG. 21

40

1k

2

GROUND VELOCITY
CALCULATING
MODULE — 11

COUPLING
COEFFICIENT
UPDATING MODULE — 14

ESTIMATOR — 12

GPS SIGNAL
RECEIVER

PROPELLER SPEED
DETECTOR — 3

VANE
ANEMOMETER — 4

10k

TEACHING SIGNAL

LOG VELOCITY
(THREE AXES)

GROUND VELOCITY
(THREE AXES)

SURFACE CURRENT
CALCULATING MODULE — 13

SURFACE CURRENT VELOCITY
+ WAVE VELOCITY

SPECTRAL RESOLUTION
MODULE — 41

DC COMPONENT

AC COMPONENT

SURFACE CURRENT
VELOCITY

WAVE PROPAGATION SPEED
AND DIRECTION, AND
WAVE ENCOUNTER PERIOD

DANGEROUSNESS DETERMINING MODULE — 42

CALCULATOR

DISPLAY UNIT — 5b

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11237477 A

- KR 20080071269